# EUROPEAN PATENT SPECIFICATION

(11) **EP 2 395 351 B1**
(45) Date of publication and mention of the grant of the patent: **03.12.2014**
(21) Application number: 10165373.1
(22) Date of filing: 09.06.2010
(51) Int. Cl.: G01N 30/88, G01N 30/06

(54) **Fluid handling with isolable bypass path**
Flüssigkeitsführung mit isolierbarem Umgehungspfad
Gestion des fluides avec chemin de dérivation isolable

(43) Date of publication of application: 14.12.2011
(73) Proprietor: Agilent Technologies, Inc., Santa Clara, California 95051 (US)
(72) Inventor: Trojer, Lukas, 76337 Waldbronn (DE)
(74) Representative: Dilg, Haeusler, Schindelmann Patentanwaltsgesellschaft mbH

(56) References cited:
- EP-A1- 1 879 026
- WO-A1-95/01566
- US-A- 5 565 171
- US-A1- 2004 119 070
- JANA KRENKOVANATHAN A. LACHERFRANTISEK SVEC: "Multidimensional system enabling deglycosylation of proteins using a capillary reactor with peptide-N-glycosidase F immobilized on a porous polymer monolith and hydrophilic interaction liquid chromatography-mass spectrometry of glycans", JOURNAL OF CHROMATOGRAPHY A, vol. 1216, 20 September 2001 (2001-09-20), pages 3252-3259, XP002642542,
- MAGGIE A. BYNUM ET AL: "Characterization of IgG N-Glycans Employing a Microfluidic Chip that Integrates Glycan Cleavage, Sample Purification, LC Separation, and MS Detection", ANALYTICAL CHEMISTRY, vol. 81, no. 21, 1 November 2009 (2009-11-01), pages 8818-8825, XP55000606, ISSN: 0003-2700, DOI: 10.1021/ac901326u

## Description

### BACKGROUND ART

The present invention relates to fluidic sample handling systems, in particular in the context of a high performance liquid chromatography application.

In high performance liquid chromatography (HPLC, see for instance http://en.wikipedia.org/wiki/HPLC), a liquid has to be provided usually at a very controlled flow rate (for instance in the range of microliters to milliliters per minute) and at high pressure (typically 20-100 MPa, 200-1000 bar, and beyond up to currently 200 MPa, 2000 bar) at which compressibility of the liquid becomes noticeable. For liquid separation in an HPLC system, a mobile phase comprising a sample fluid with compounds to be separated is driven through a stationary phase (such as a chromatographic column), thus separating different compounds of the sample fluid. Liquid chromatography allows for the analysis of many biochemical samples.

US 2004/0191856 A1 discloses that a chemical substance is fixed and a buffer solution is filled in a round-shaped reaction element. A given volume of air is sucked in through an air inlet and a sample solution is sucked in. In addition, a given volume of air is sucked in. Air and the sample solution are transported sequentially into the reaction element in that order. The reaction element is filled with the sample solution, which is placed between two air layers to prevent it from mixing with the buffer solution. The sample solution between two air layers reciprocates at a given velocity of flow in the reaction element, accelerating high efficiency chemical reactions. US 2004/0191856 A1 also discloses the use of a HPLC.

Wang C, Oleschuk R, Ouchen F, Li J, Thibault P, Harrison DJ., "Integration of immobilized trypsin bead beds for protein digestion within a microfluidic chip incorporating capillary electrophoresis separations and an electrospray mass spectrometry interface", Rapid Commun Mass Spectrom. 2000;14(15):1377-83, discloses a microfluidic device in which an electrospray interface to a mass spectrometer is integrated with a capillary electrophoresis channel, an injector and a protein digestion bed on a monolithic substrate. A large channel was created to act as a reactor bed for trypsin immobilized on beads. Separation was performed in channels, feeding into a capillary, attached to the chip. Sample was pumped through the reactor bed. The rate and efficiency of digestion was related to the flow rate of the substrate solution through the reactor bed.

The analysis of glycoprotein structure and function, known as glycomics, has become a new and important area of research. Glycosylation is a posttranslational modification of cell surface and extracellular matrix proteins. Glycoproteins play an important role in cell-adhesion and immune response. Changes in abundance and glycan profiles have been correlated with progression of diseases, such as cancer and rheumatoid arthritis. In addition, the analysis of glycan profiles is critical in the biotherapeutic industry. For example, antibody bio-therapeutics contain glycosylated amino acids that assist in maintaining drug activity and preventing drug rejection by the immune system. Therefore, companies that make these bio-therapeutics have to monitor and verify their glycan profiles.

Glycan analysis is usually performed by liquid chromatography, capillary electrophoresis or mass spectrometry methods. In either case, the glycans are removed from the glycoproteins, separated and analyzed. The process of removing glycans from glycoproteins traditionally includes an in-solution enzymatic reaction with PNGase F that requires a 24-hour incubation time. After the enzyme reaction, protein precipitation is needed to separate the glycans from the proteins for analysis of the glycans. Finally, the free glycans are analyzed with mass spectrometry or capillary electrophoresis or liquid chromatography. These steps are time-consuming and cumbersome, and the manual operations are error-prone. Furthermore, a relatively large quantity of starting materials is required to generate high quality data.

Jana Krenkova, Nathan A. Lacher, Frantisek Svec, "Multidimensional system enabling deglycosylation of proteins using a capillary reactor with peptide-N-glycosidase F immobilized on a porous polymer monolith and hydrophilic interaction liquid chromatography-mass spectrometry of glycans", Journal of Chromatography A, 1216 (2009) 3252-3259, discloses a reactor with immobilized peptide-N-glycosidase F on a monolithic polymer support in a capillary that allows fast and efficient release of N-linked glycans from immunoglobulin G molecules. Performance of the disclosed reactors was determined through glycan release from several glycoproteins including ribonuclease B, chicken albumin, and human immunoglobulin G and their detection by matrix-assisted laser desorption-ionization/time-of-flight mass spectrometry. The reactor was integrated into a multidimensional system comprising on-line glycan release and their separation via hydrophilic interaction liquid chromatography followed by electrospray ionization/time-of-flight mass spectrometry detection.

Maggie A. Bynum, Hongfeng Yin, Katherine Felts, Yvonne M. Lee, Craig R. Monell, Kevin Killeen, "An Integrated Microfluidic LC-MS Chip for Rapid Online Deglycosylation and Characterization of N-glycans from Recombinant IgG Antibodies", ASMS 2009, discloses an integrated microfluidic liquid chromatography/mass spectrometry (LC/MS) chip for enzymatic deglycosylation with immobilized PNGase F enzyme, glycan purification, separation, identification and quantitation of N-linked glycans. With this chip, the experimental time from antibody injection to LC/MS results is reduced to 10 minutes.
US 5,565,171 relates to a continuous biochemical reactor for analysis of subpicomole quantities of complex organic molecules. A sample peptide or protein is loaded onto a reaction mat. A switch valve is switched for the duration of coupling and cleavage to isolate a supply capillary from a primary capillary. Once the amino acid residue (reaction product) has been produced, it is extracted from reaction mat 32 using a solvent such as benzene. Thereafter, during conversion, the reaction chamber 20 must be isolated to avoid hydrolysis of the truncated peptide.
US 2004/0119070 A1 relates to microfluidic devices and systems for integration and/or isolation of various functions in a microchip system and methods for using the same. The system consists of three microfabricated chips, edge-joined, in fluid communication with each other. In position 1 of the second chip, matrix is introduced into the anode port of the third chip thereby filling the separation and injector regions. Sample and reactants are added to the sample inlet port of the first chip thereby filling the reaction chamber of the second chip. The second chip is then moved to position 2, whereby the reaction chamber is isolated from the rest of the device. Chemical/biological reactions are performed in the reaction chamber. Following the reaction process, the second chip is returned to position 1 so that the reaction products can be moved into the third chip for injection and separation.
WO 95/01566 discloses a system for benzodiazepine detection. It is disclosed an immobilized enzyme reactor in which the test sample, conveyed by a carrier liquid, can be placed in contact with an immobilized *glucuronoso*-hydrolase, for example a flow through column packed with the support bound enzyme. The sample is conveyed into the reactor by a volume of pH 6.9 buffer at a flow rate of 0.1 to 1.0 mL/min.
EP 1879026 A1 discloses a sample focusing unit for a fluidic system adapted for processing a mobile phase containing a fluidic sample.

However, an efficient and simple way of performing glycan analysis would be desirable.

### DISCLOSURE

It is an object of the invention to allow for an efficient fluid handling. The object is solved by the independent claims. Further embodiments are shown by the dependent claims.

According to an embodiment of the present invention, a device for handling a fluidic sample is provided, the device comprising (at least in one operation mode thereof) a flow-through path configured for conducting the fluidic sample, further comprising (at least in one operation mode of the device) a bypass path being switchably connectable to (in an embodiment integrable in) or disconnectable from the flow-through path for selectively enabling or disabling fluid communication between the flow-through path and the bypass path, and a chemical reactor arranged in the bypass path and being configured for performing a solid phase reaction with the fluidic sample.

According to another embodiment of the present invention, a method of handling a fluidic sample is provided, wherein the method comprises conducting the fluidic sample from a flow-through path to a bypass path being in fluid communication with the flow-through path, disconnecting the bypass path from the flow-through path for disabling fluid communication between the flow-through path and the bypass path, thereby isolating the bypass path (particularly with regard to a fluidic environment) and the fluidic sample in the bypass path, and performing a solid phase reaction between a chemical reactor arranged in the bypass path and the fluidic sample while the bypass path is isolated.

The term "flow-through path" may particularly denote a fluidic path such as a channel or capillary through which a fluidic sample can flow from a source or inlet position to a destination or outlet position. The flow-through paths may or may not be bifurcated, and may even be realized as an annular path. In one embodiment, the flow-through path is switchable so as to change appearance in different operation modes. In another embodiment, the flow-through path may have a constant appearance.

The term "bypass path" may particularly denote a fluidic path which can be selectively connected or disconnected from the flow-through path. In a first operation mode, a fluidic sample may flow from the flow-through path via the bypass pass back to the flow-through path. In another operation mode, the bypass path may be fluidly isolated from the flow-through paths so that one sample (or solvent) may then flow through the flow-through path, while another sample may be temporarily isolated within the bypass path.

The term "chemical reactor" may particularly denote any chemically active entity which has the capability of performing a chemical reaction with an educt to produce a product, wherein this reaction may involve biological, biochemical and/or chemical processes. An example for a "chemical reactor" is a biochemical reactor. "Biochemical" may denote of or relating to biochemistry, and/or involving chemical processes which may occur in living organisms. Encymatic reactions are a further example for biochemical reactions. Further examples for biochemical processes are cleaving of substances such as amino acids, bases, or other moieties such as sugar. Chemical reactions may further cover a reaction between a catalyst bound to the solid support with particles of the sample. Moreover, chemical reactions may further cover a reaction between any substrate bound to the solid support with an educt of the sample to produce any kind of product.

The term "solid phase reaction" may particularly denote any chemical, particularly biochemical, reaction between a fluidic sample which may be in a liquid phase and a substrate at which chemically, particularly biochemically, active molecules are immobilized. Hence, the term solid phase reaction may be substituted by the term phase boundary reaction, liquid solid reaction or solid-state reaction.

As used herein, if two objects are in "fluid communication," there is a conduit between the two objects that allows fluid to flow from one of the objects to the other. A conduit may be a pore, orifice, opening, channel, tube, or the like. If an object is "isolated", there is no such conduit from the object to another object that allows fluid to flow from one of the objects to the other.

The term "in at least one operation mode" denotes that the shape and the fluid guiding properties of the flow-through path may change during operating, particularly switching, the device. Also the shape and the fluid guiding properties of the bypass path may change during operating, particularly switching, the device.

According to an exemplary embodiment, a fluidic sample may be loaded on a chemical reactor in a bypass path by conducting an excess of such a fluidic sample via a flow-through path to the bypass path. The loading procedure may be continued until sufficient sample is in the bypass path. Then, the chemical reactor in the bypass path may be uncoupled with regard to an environment by switching away the flow-through path for a predetermined time interval. During this period of disconnection, a defined small volume of fluidic sample remains in close interaction with the chemical reactor so as to perform a desired solid phase reaction to a desired degree. Due to the limited volume of the fluidic sample in the bypass path, a high concentration of chemical agent for performing a solid phase reaction with a fixed volume of the fluidic sample may be provided in the bypass path. After having fully completed the desired chemical processes (or even after having completed them to a desired degree), the bypass path may be reconnected to the flow-through path to thereby continue an analysis procedure for characterizing one or more products of the chemical reaction. Since chemical reaction times may be very different for different samples, the provision of a disconnectable bypass path may allow to take account of even very different reaction kinetics of the chemical processes by simply selecting the disconnection time accordingly. The local ratio between chemical reactor and substrate can be rendered very high in this disconnected path which may significantly improve the percentage of fluidic sample particles actually reacting with the chemical reactor. Hence, the staying time may be defined by a user-controllable time interval for which the bypassing of the chemical reactor from the flow-through path is maintained.

In the following, further exemplary embodiments of the device will be explained. However, these embodiments also apply to the method.

According to an exemplary embodiment, the chemical reactor may be an enzymatic reactor, i.e. a reactor comprising enzymes. The term "enzyme" may denote proteins having the capability to catalyze (i.e. increase the rates of) chemical reactions. In enzymatic reactions, the molecules at the beginning of the process may be called substrates, and the enzyme converts them into different molecules, called the products. Enzymes may function by lowering the activation energy for a reaction. For instance, PNGase F may be immobilized at a solid support and may function as an enzyme for cleaving glycans from glycoproteins. Another example for an enzyme which can be used according to exemplary embodiments is trypsin which is a serine protease found in the digestive system of many vertebrates, where it hydrolyzes proteins. Trypsin has the capability to cleave peptide chains. The skilled person will understand that many other enzymes may be used such as amylases, cellulases, pectinases, lipases, lactases, and so on. By isolating enzyme reactors positioned in a bypassing path, completion or almost completion of an enzymatic reaction of an ensemble of sample molecules may be ensured, since this allows a definable volume of fluidic sample to be processed by a definable amount of enzyme for a definable time interval at definable conditions (such as temperature) without disturbing influences from an environment.

In an embodiment, the chemical reactor may comprise a solid support and chemically active particles immobilized on the solid support. With such an architecture, a solid phase reaction between the chemically active particles and the fluidic sample may be rendered efficient. The chemical reactor may be configured as a column.

In an embodiment, the chemical reactor may comprise a deglycosylation unit comprising a solid support and an enzyme immobilized to the solid support, wherein the enzyme is capable of cleaving carbohydrates from glycoproteins. By cleaving carbohydrates from glycoproteins, the carbohydrates and/or the moieties of the glycoproteins may be analyzed separately, for instance using one or more chromatographic columns. The term "carbohydrate" may refer to any compound in the carbohydrate family, including sugars, disaccharides, oligosaccharides, polysaccharides, simple carbohydrates, complex carbohydrates, and the like. A deglycosylation column may comprise a solid support to which an enzyme is attached, with the enzyme capable of cleaving carbohydrates from a glycoprotein. In glycoproteins, the carbohydrate moiety may be attached to the nitrogen of the amide group in asparagine residues (N-linked glycans), or the oxygen of the hydroxyl group in serine or threonine residues (O-linked glycans). Any enzyme that can cleave the carbohydrate moiety from glycoproteins can be used in exemplary embodiments, including enzymes that are specific for N-linked or O-linked glycans. These enzymes are known in the art and include, without being limited to, PNGase F , β-N-Acetyl- 5 glucosaminidase, α-Fucosidase, β- Galactosidase, α -Galactosidase, α-Neuraminidase, α- Mannosidase, β-Glucosidase, β-Xylosidase, β -Mannosidase, Endo F1, Endo F2, Endo F3, and Endo H. Materials and methods of immobilizing proteins to solid supports are also known in the art (see, for instance, Palm and Novotny, 2005). For example, the solid support in the deglycosylation column 110 may be glass or polymer beads, or a monolithic medium (such as polymethacrylate, polystyrene, polyacrylamide, or the like).

In another embodiment, the chemical reactor may be a biochemical reactor may comprise an amino acid cleaving unit comprising a solid support and an enzyme immobilized to the solid support, wherein the enzyme comprises trypsin. The person skilled in the art will understand that trypsin is an enzyme which allows cleaving of certain amino acids from proteins which may be advantageous for analyzing sections of a protein.

In an embodiment, the bypass path may be an annular fluidic path when being disconnected from the flow-through path. The term "annular" may denote a property of the bypass path that it is shaped like a ring, i.e. to have no beginning and no end. By bypassing such a fluidic loop from the rest of a fluidic system, the volume may allow the fluidic sample to circulate freely along the annulus to thereby promote a chemical reaction. However, as an alternative to an annular bypass path, it is also possible that the bypass path is a consecutive structure such as a straight or bent fluid line.

The flow-through path may, in at least one operation mode, comprise at least one inlet for supplying the fluidic sample and may comprise at least one outlet for draining the fluidic sample or a fraction or section thereof after having passed at least a part of the flow-through path with or without having passed at least a part of the bypass path. Hence, the fluidic device may be operated in different operation modes. In one operation mode, the fluidic sample first flows through a part of the flow-through path, is then directed to the bypass path, and is directed back to another portion of the flow-through path. In another operation mode, the fluidic sample may remain in the disconnected bypass path for a predetermined time interval, before it can be enabled to flow back to the flow-through path. The different operation modes may be adjusted by switching operations such as switching fluidic valves.

In an embodiment, the device may comprise a substrate, wherein at least a part of the components of the device may be integrated, particularly monolithically integrated, in the substrate. In an embodiment, all components of the device are integrated in the substrate. Hence, it is possible to realize the device as an integrated chip in which the various components are miniaturized. Such an integrated chip arrangement may be formed by using a substrate such as a laminate of different layers having channels and other microfluidic components such as miniature separation columns formed therein. Such an architecture may allow to process even very small amounts of samples in a short time.

The device for handling a fluidic sample may hence be a "microfluidic device" denoting a device comprising chambers and/or channels of micron or submicron dimensions that allow passage of fluid. The chambers or channels are generally 1 µm to less than 1000 µm in diameter (or, if not circular, the largest dimension of the cross section), such as 1 µm to 500 µm, 10 µm to 300 µm, 50 µm to 250 µm, by way of examples. The device for handling a fluidic sample may even be a "nanofluidic device" having corresponding dimension (for instance comprising chambers and/or channels of nanometer or subnanometer dimensions) which may be up to three orders of magnitude or more smaller than in a microfluidic device.

As an alternative to an integrated chip configuration, the device may comprise tubular fluid channels for providing a fluidic connection between at least a part, particularly all, of the components of the device being provided as separate or separable physical structures. Hence, other embodiments can be configured as an array of separate macroscopic components which are connected to one another by tubes. For instance, a macroscopic separation column may have a length of 10 cm. While in the previously described chip-integrated embodiment, separation columns, rotary valves and the like may be all integrated in the substrate, the now described embodiment provides individual separation columns, fluidic switches and the like so as to form a large size chemical arrangement.

In an embodiment, the device may comprise a first separation unit arranged in the flow-through path downstream the bypass path for trapping a fraction or product produced by an interaction between the fluidic sample and the chemical reactor. The term "downstream" may denote an arrangement in which the fluidic sample, during controlled operation of the device, first flows through one component and then through another component downstream the first component. The term "upstream" may denote an arrangement in which the fluidic sample, during controlled operation of the device, first flows through one "upstream" component and then through another component. Particularly, such a first separation unit may be a first chromatographic separation column which may be configured for retention of a first product of the chemical reaction. For instance, in the case of deglycosylation of glycoproteins, this first product may be the resulting proteins without cleaved carbohydrates. By adjusting the chemical conditions such as pH-value, properly selecting trapping material of the chromatographic column, etc., it is possible to force selectively the first products to be trapped on the first separation unit, whereas other components, including a second product, may pass the first separation unit. Again for the example of deglycosylation, the second product may be the cleaved carbohydrates.

Still referring to the previously described embodiment, the device may further comprise a second separation unit arranged in the flow-through path downstream the first separation unit for trapping another fraction produced by the interaction between the fluidic sample and the chemical reactor. Also in this context, the term "downstream" may relate to a flowing direction of the fluidic sample through the device. The second separation unit may be configured, particularly by properly adjusting the chemical properties such as pH-value, solvent and separation material, so that the second product may be trapped selectively. The second separation unit may be a second chromatographic column. In the example of deglycosylation, cleaved carbohydrates can be trapped by this second separation unit.

In an embodiment, the device may be switchable for selectively enabling or disabling fluid communication between the first separation unit and the second separation unit. For instance, the second separation unit may be disconnected from the first separation unit when the flow-through path is still connected to the bypass path for loading fluidic sample on the chemical reactor of the bypass path. With such a procedure which may be denoted as a "column overfill" a sufficiently high amount of fluidic sample is supplied to the chemical reactor, while the second separation unit is decoupled from this fluidic path. Later on, while the fluidic sample reacts at the chemical reactor in the isolated bypass path, the first separation unit may remain decoupled from the second separation unit. However, after having finished the chemical reaction in the bypass path and the bypass path is reconnected to the flow-through path, the first and the second separation unit may be serially coupled to one another and with the bypass path so as to selectively trap a first and a second product on a respective one of the first and the second separation unit.

The device may furthermore comprise a third separation unit arranged in the flow-through path downstream the second separation unit for analyzing the other fraction. The third separation unit may also be a chromatographic column. It may allow to serve as an actual separation column. For instance, after having trapped the first fraction on the first separation unit and the second fraction on the second separation unit, the second fraction may be further analyzed by again decoupling the first separation unit from the second separation unit but coupling the second separation unit with the third separation unit. The trapped second fraction may then be supplied from the second separation unit to the third separation unit for an actual chromatographic separation.

In an embodiment, the device may be switchable for selectively enabling or disabling fluid communication between the second separation unit and the third separation unit. This may be advantageous, since during trapping the first and second fraction selectively on the first and second separation unit, the third separation unit may still remain clean. Only after having trapped sufficient molecules on the first and the second separation unit, the first separation unit may be decoupled from the second separation unit and the second separation unit may be brought in fluid communication with the third separation unit so that, without carryover of the first fraction, the second fraction may be analyzed properly by the third separation unit. After having performed this chromatographic separation, the separated components may then be supplied to a mass spectroscopy device arranged downstream of the third separation unit, for further analysis.

Any one of the first to third separation unit or at least one further or alternative separation unit may be configured as a column, particularly a chromatographic column. A "column" may be an apparatus for a particular purpose, usually for preferentially binding or retaining a substance or class of substances. Typically, a column comprises a housing in which a filling is located, and the filling is capable of preferentially binding or retaining a substance or class of substances. In some embodiments, the filling may merely provide a medium for various substances to move through, while the substances move in different speeds (for instance, due to an electric field). A column (or a housing or filling) can be of any size, shape or structure, and made of any material, that is consistent with the purpose of the column.

Such a chromatographic column (see for instance http://en.wikipedia.orq/wiki/Column chromatography) may provide a stationary phase. The column might be a glass or steel tube (for instance with a diameter from 50 µm to 5 mm and a length of 1 cm to 1 m) or a microfluidic column (as disclosed for instance in EP 1577012 or the Agilent 1200 Series HPLC-Chip/MS System provided by the applicant Agilent Technologies, see for instance http://www.chem.aqilent.com/Scripts/PDS.asp?IPaqe=38308). For example, a slurry can be prepared with a powder of the stationary phase and then poured and pressed into the column. The individual components are retained by the stationary phase differently and separate from each other while they are propagating at different speeds through the column with the eluent. At the end of the column they elute one at a time. During the entire chromatography process the eluent might be also collected in a series of fractions. The stationary phase or adsorbent in column chromatography usually is a solid material. The most common stationary phase for column chromatography is silica gel, followed by alumina. Cellulose powder has often been used in the past. Also possible are ion exchange chromatography, reversed-phase chromatography (RP), affinity chromatography or expanded bed adsorption (EBA). The stationary phases are usually finely ground powders or gels and/or are microporous for an increased surface, though in EBA a fluidized bed is used.

Certain trapping columns may be capable of preferentially binding carbohydrates but not proteins. For example, hydrophilic interaction liquid chromatography (HILIC) stationary phase can be used to retain and desalt the glycans released from glycoproteins in the deglycosylation column.

A separation column is capable of separating glycans based on their physical and/or chemical properties. Two main categories of the separation column are liquid chromatography columns and capillary electrophoresis columns.

In an embodiment, the device may comprise a switchable valve. Such a switchable valve may be switched triggered by a user or triggered by a control unit such as central processing unit (CPU) or a microprocessor. By switching the switchable valve, a corresponding desired fluid path may be adjusted.

In an embodiment, the switchable valve may be a rotary valve. In another embodiment, the switchable valve may be a linear switchable valve. Although a rotor may be used as a switching element to change the fluid communication state of the columns, other switching elements can be utilized. For instance, a set of channels and valves can be engaged with device so that, upon switching one valve or multiple valves, the deglycosylation column is disconnected from the trapping column, and the trapping column is connected with the separation column.

In an embodiment, the switchable valve may enable or disable fluid communication between the flow-through path and the bypass path. Hence, a switching operation may be performed which selectively connects or disconnects the flow-through paths and the bypass path. Additionally or alternatively, the switchable valve may be configured for enabling and disabling fluid communication between different separation units. For example, the switchable valve may allow to selectively connect or disconnect the first separation unit and/or the second separation unit and/or the third separation unit. Such a switching may be useful for adjusting a sequence of chemical procedures, such as the one described above.

In an embodiment, the switchable valve may comprise a first switch mechanism for enabling or disabling fluid communication between the flow-through paths and the bypass path. The switchable valve may comprise an independently operable second switch mechanism for enabling or disabling fluid communication between different separation units. For instance, such a switching may be performed for selectively connecting or disconnecting the second and the third separation unit. With two such independent operations, a large variety of different operation modes may be flexibly adjusted. In an embodiment, the two mechanisms may be machine-operated so as to allow for an automatic process control.

In an exemplary embodiment, the first switch mechanism may be an outer rotary mechanism arranged around a circumference of the second switch mechanism being an inner rotary mechanism. By rotating any of these switch mechanisms for performing a switch operation, an easily adjustable system may be provided. The arrangement of the first switch mechanism around the second switch mechanism may allow to efficiently use the provided space.

Alternatively, the second switch mechanism may be an outer rotary mechanism arranged around the circumference of the first switch mechanism being an inner rotary mechanism. As a further alternative, the various switch mechanism may be juxtaposed to one another, i.e. arranged side by side.

In an embodiment, the valve may comprise a first valve member and a second valve member, wherein at least one of the first and second valve members is adapted to be moved with respect to the other. One of the first and second valve members may comprise a plurality of ports, and the other may comprise at least one groove for fluidly coupling respective ones of the ports in dependency on a relative movement position of the first and second valve members with respect to each other. This is a very simple architecture specifically configured for chip configurations of the device in which a movement of two members relative to one another allows to provide definable fluidic paths between the grooves and the ports, thereby allowing adjustment of the different operation modes.

The valve of the device may comprise a third valve member and a fourth valve member, wherein at least one of the third and fourth valve members is adapted to be moved with respect to the other, one of the third and fourth valve members comprises a plurality of ports and the other comprises at least one groove for fluidly coupling respective ones of the ports in dependency on a relative movement position of the third and fourth valve members with respect to each other. Hence, two cooperating pairs of valve members may be provided for instance as an inner and an outer rotational valve mechanism. For instance, the first and the second valve member may be arranged around the third and the fourth valve member.

Exemplary embodiments might be embodied based on most conventionally available HPLC systems, such as the Agilent 1200 Series Rapid Resolution LC system or the Agilent 1100 HPLC series (both provided by the applicant Agilent Technologies - see www.agilent.com - ).

A mobile phase (or eluent) to be mixed with the fluidic sample for conduction through the various fluid paths can be either a pure solvent or a mixture of different solvents. It can be chosen for instance to minimize the retention of the compounds of interest and/or the amount of mobile phase to run the chromatography. The mobile phase can also been chosen so that the different compounds can be separated effectively. The mobile phase might comprise an organic solvent like for instance methanol or acetonitrile, often diluted with water. For gradient operation water and organic is delivered in separate bottles, from which the gradient pump delivers a programmed blend to the system. Other commonly used solvents may be isopropanol, THF, hexane, ethanol and/or any combination thereof or any combination of these with aforementioned solvents.

The fluidic sample may comprise any type of process liquid, natural sample like juice, body fluids like plasma or it may be the result of a reaction like from a fermentation broth.

The pressure in the mobile phase might range from 2-200 MPa (20 to 2000 bar), in particular 10-150 MPa (100 to 1500 bar), and more particular 50-120 MPa (500 to 1200 bar).

The speed of the present methods depends on complexity of the samples, as longer separation is required when more glycans need to be separated. In addition, if finer separation is desired, such as separation of isomers, a longer separation column and thus longer separation time is needed as well. By the present methods, the process of deglycosylation, cleaning, trapping and separation can generally be achieved in one minute to an hour, such as in 1, 2, 3, 4, 5, 10, 15, 20, 25, 30, 35, 40, 45, 50, 55, or 60 minutes. In some embodiments, the process is performed under conditions that allow a substantial amount of the glycans to remain in amino glycan forms. This substantial amount may be, for example, at least 95, 90, 80, 70, 60, 50, 40, or 30% of the glycans in the sample.

A small amount of sample (100 ng glycoproteins) may already yield strong signals, suggesting that the amount of the sample can be reduced. Thus, in some embodiments, the present methods can be used to analyze a sample containing up to 10, 20, 30, 40, 50, 60, 70, 80, 90 or 100 ng of glycoproteins.

Microfluidic devices are typically fabricated by generating channels and chambers in a material that forms the device or layers of the device. Suitable materials for forming the device, or layers of the device, are selected with regard to physical and chemical characteristics that are desirable for proper functioning of the microfluidic device. For example, a device is fabricated from a material that enables formation of high definition features, i.e., microchannels, microchambers and the like, that are of micron or submicron dimensions. Thus, the material should be capable of microfabrication using, for instance, dry etching, wet etching, laser etching, laser ablation, molding, embossing, or the like, so as to have desired miniaturized surface features. Microstructures can also be formed on the surface of a material by adding material thereto, for example, polymer channels can be formed on the surface of a glass substrate using photo-imageable polyimide. Also, all device materials used should be chemically inert and physically stable with respect to any substance with which they comes into contact when used to introduce a fluid sample (for instance, with respect to pH, electric fields, etc.). Suitable materials for forming the present devices include, but are not limited to, polymeric materials, ceramics (including aluminum oxide and the like), glass, metals, composites, and laminates thereof.

Polymeric materials are typically organic polymers that are homopolymers or copolymers, naturally occurring or synthetic, crosslinked or uncrosslinked. Specific polymers of interest include, but are not limited to, polyimides, polycarbonates, polyesters, polyamides, polyethers, polyurethanes, polyfluorocarbons, polystyrenes, poly(acrylonitrile-butadiene-styrene)(ABS), acrylate and acrylic acid polymers such as polymethyl methacrylate, and other substituted and unsubstituted polyolefins, and copolymers thereof. Polyimide is of particular interest and has proven to be a highly desirable substrate material in a number of contexts. Polyetheretherketones (PEEK) alsoexhibit desirable biofouling resistant properties.

The devices of exemplary embodiments may also be fabricated from a "composite," i.e., acomposition comprised of unlike materials. The composite may be a block composite, for instance, an A-B-A block composite, an A-B-C block composite, or the like. Alternatively, the composite may be a heterogeneous combination of materials, i.e., in which the materials are distinct from separate phases, or a homogeneous combination of unlike materials. As used herein, the term "composite" is used to include a "laminate" composite. A "laminate" refers to a composite material formed from several different bonded layers of identical or different materials. Other preferred composite materials include polymer laminates, polymer-metal laminates, for instance, polymer coated with copper, a ceramic-in-metal or a polymer-in-metal composite. One preferred composite material is a polyimide laminate formed from a first layer of polyimide such as Kapton®, that has been co-extruded with a second, thin layer of a thermal adhesive form of polyimide known as KJ®, both available from DuPont (Wilmington, Del.).

The present devices can be fabricated using any convenient method, including, but not limited to, micromolding and casting techniques, embossing methods, surface micro-machining and bulk-micromachining. The latter technique involves formation of microstructures by etching directly into a bulk material, typically using wet chemical etching or reactive ion etching ("RIE"). Surface micro-machining involves fabrication from films deposited on the surface of a substrate. An exemplary surface micro-machining process is known as "LIGA." See, for example, Becker et al. (1986), Ehrfeld et al. (1988), and Guckel et al. (1991). LIGA involves deposition of a relatively thick layer of an X-ray resist on a substrate followed by exposure to high-energy X-ray radiation through an X-ray mask, and removal of the irradiated resist portions using a chemical developer.

Another technique for preparing the present devices is laser ablation. In laser ablation, short pulses of intense ultraviolet light are absorbed in a thin surface layer of material. Preferred pulse energies are greater than about 100 millijoules per square centimeter and pulse durations are shorter than about 1 microsecond. Under these conditions, the intense ultraviolet light photo-dissociates the chemical bonds in the substrate surface. The absorbed ultraviolet energy is concentrated in such a small volume of material that it rapidly heats the dissociated fragments and ejects them away from the substrate surface. Because these processes occur so quickly, there is no time for heat to propagate to the surrounding material. As a result, the surrounding region is not melted or otherwise damaged, and the perimeter of ablated features can replicate the shape of the incident optical beam with precision on the scale of about one micron or less.

Laser ablation will typically involve use of a high-energy photon laser such as an excimer laser of the F2, ArF, KrCl, KrF, or XeCl type. However, other ultraviolet light sources with substantially the same optical wavelengths and energy densities may be used as well.

Laser ablation techniques are described, for example, by Znotins et al. (1987), and in U.S. Pat. Nos. 5,291,226 and 5,305,015 to Schantz et al.

Embodiments of the invention can be partly or entirely embodied or supported by one or more suitable software programs, which can be stored on or otherwise provided by any kind of data carrier, and which might be executed in or by any suitable data processing unit. Software programs or routines can be preferably applied in or by the control unit.

In the following, further exemplary embodiments of the method will be explained. However, these embodiments also apply to the device.

Conducting the fluidic sample from a flow-through path to a bypass path being in fluid communication with the flow-through path may particularly comprise loading a part of the fluidic sample on the chemical reactor and conducting another part of the fluidic sample over the chemical reactor to a drain. This procedure may be denoted as column overfill. In such a scenario, the flow-through path and the bypass path may be in fluid communication so that the fluidic sample is filled from an inlet of the flow-through path to the bypass path and the chemical reactor therein to another portion of the flow-through path. In this embodiment, the first separation unit may still be connected to the active flow path. In an embodiment, performing the solid phase reaction transforms the fluidic sample into a first fraction and a second fraction. Particularly, a second fraction may be cleaved from the fluidic sample, thereby producing a first fraction being free of the second fraction, and the second fraction.

The method may further comprise, after the column overfill phase, maintaining the bypass path in the isolated state for a predetermined time interval or until determining that the fluidic sample has performed the solid phase reaction to a predefined amount. A proper time interval may depend on a specific chemical system to be analyzed and may be estimated by reference experiments based on specific reaction kinetics and chemical boundary conditions. However, it is also possible that a sensor or the like is arranged within the bypass path for detecting that the reaction has been completed fully or at least to a sufficient degree. For instance, a chemosensor having immobilized chemically active molecules (particularly a biosensor having immobilized biochemically active molecules) can be used for this purpose, wherein a sensor event may be detected for instance electrically or optically as known by those skilled in the art.

The method may further comprise, when the fluidic sample has performed the solid phase reaction to the predefined amount or for the predetermined time interval, re-enabling fluid communication between the flow-through path and the bypass path, thereby conducting the first fraction and the second fraction onto a first separation unit trapping selectively the first fraction while allowing the second fraction to pass the first separation unit. The second fraction may later be trapped on a second separation unit. Such a procedure allows to separate the two components resulting from the chemical reaction by trapping them on two different separation units. Solvent, etc. may be conducted into a waste container.

The method may further comprise, while the bypass path is isolated, conducting fluidic sample through the flow-through path to the first separation unit. In this configuration, a second portion of the flow-through path including the second separation unit (and also a third separation unit) may also be the subject of pumping a solvent or the like.

Re-enabling of the fluid communication after the isolation of the bypass path may be performed to conduct the second fraction onto the second separation unit selectively trapping the second fraction. As described above, the first and the second fractions are thereby spatially separated by trapping them onto different separation units for separate further analysis.

During this loading of the two fractions on the first and the second separation unit, other fractions of the fluidic sample may be conducted to a drain or a waste or a fractioner.

Subsequently, the method may further comprise switching the second separation unit in fluid communication with a third separation unit and disabling fluid communication between the first separation unit and the second separation unit. In this embodiment, the fraction trapped on the second separation unit may be supplied, without carry over from the first fraction, onto an actual separation column for chromatographic separation.

In an embodiment, the above-described temporary disconnection of the bypass path may comprise temporarily disconnecting the bypass path from any mobile phase drive. Hence, while the bypass path is isolated, there may be in an embodiment no connection of the bypass path with any pumping system being connected or connectable to the flow-through path. This allows the sample to freely react in the bypass path with chemical agents of the chemical reactor without introducing new sample into this closed volume. However, in another embodiment, it is possible that for instance a circulation or mixing of the sample within the isolated part occurs to further promote reaction between the sample and the chemical reactor. It is also possible that other ways of promoting such a reaction are performed, for instance heating with a heating element which is capable of heating the fluidic sample in the bypass path to speed up the reaction.

Hence, exemplary embodiments may implement a column overfill method allowing to adapt the chemical reaction time (for instance deglycosylation time) without changing size of a chemical reactor (for instance enzyme reactor) or loading flow rate. Hence, for the example of deglycosylation, the residence time may be increased to a desired value, for instance minutes instead of seconds. Furthermore, the total cycle time of the described method is comparable to a flow-through method, as loading flow rate can be increased. Therefore, a chemical reaction such as a deglycosylation of all types of antibodies can easily be brought to completion, thereby obtaining stable relative glycan ratios and therefore a high degree of reproducibility. Moreover, such a method may keep carryover very small.

### BRIEF DESCRIPTION OF DRAWINGS

Other objects and many of the attendant advantages of embodiments of the present invention will be readily appreciated and become better understood by reference to the following more detailed description of embodiments in connection with the accompanied drawings. Features that are substantially or functionally equal or similar will be referred to by the same reference signs.

Figure 1 shows a liquid separation system, in accordance with embodiments of the present invention, for instance used in high performance liquid chromatography (HPLC).

Figure 2 to Figure 5 show a device for handling a fluidic sample in different operation modes according to an exemplary embodiment of the invention.

Figure 6 illustrates diagrams showing counts versus acquisition time for a flow-through method, a column overfill method according to an exemplary embodiment, and an In-Solution reference.

Figure 7 shows diagrams similar to Figure 6 for another material.

Figure 8 illustrates diagrams showing counts versus acquisition times for a flow-through method and a column overfill method according to an embodiment, and also comparing the carryover of these two methods.

Figure 9 shows diagrams illustrating a dependency between a peak area and a sample concentration for different samples.

Figure 10 shows the chemical mechanism of enzymatic action of PNGase F.

Figure 11 shows a device for handling a fluidic sample in an integrated chip configuration according to an exemplary embodiment.

Figure 12 schematically illustrates another system for deglycosylation.

The illustration in the drawing is schematically.

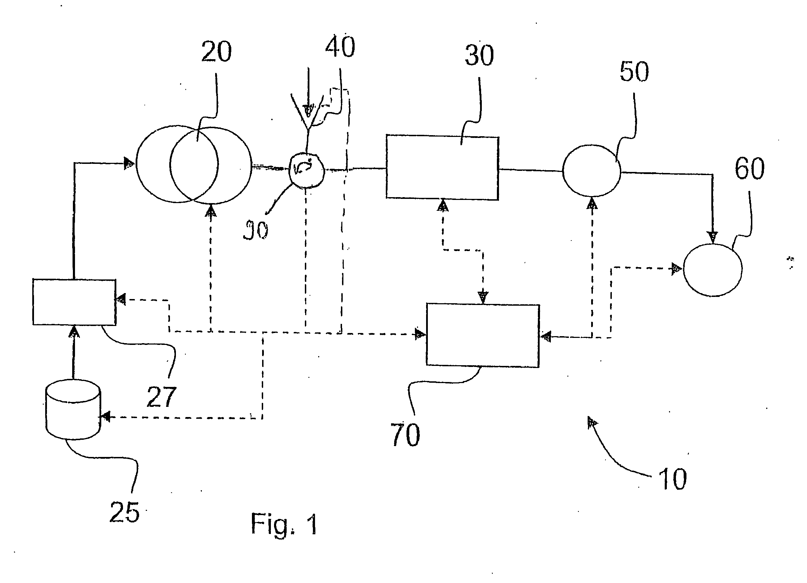

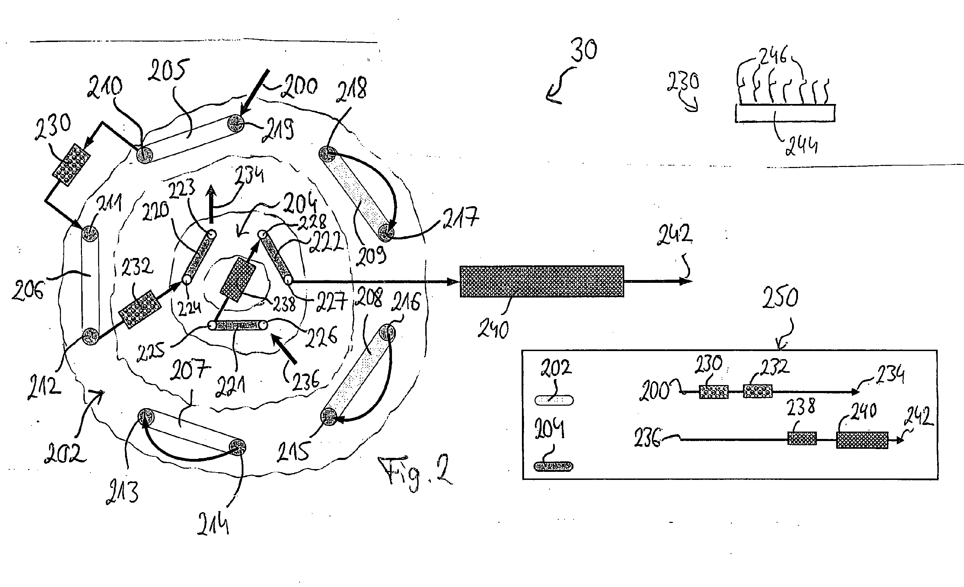

Referring now in greater detail to the drawings, **Figure 1** depicts a general schematic of a liquid separation system 10. A pump 20 receives a mobile phase from a solvent supply 25, typically via a degasser 27, which degases and thus reduces the amount of dissolved gases in the mobile phase. The pump 20 - as a mobile phase drive - drives the mobile phase through a separating device 30 which comprises an encymatic reactor and various chromatographic columns as well as a flow through path and a bypass path, as illustrated in more detail in Figure 2 to Figure 5. A sampling unit 40 can be provided between the pump 20 and the separating device 30 in order to subject or add (often referred to as sample introduction) a sample fluid into the mobile phase. The stationary phase of the separating device 30 is adapted for separating compounds of the sample liquid. A detector 50 is provided for detecting separated compounds of the sample fluid. A fractionating unit 60 can be provided for outputting separated compounds of sample fluid.

While the mobile phase can be comprised of one solvent only, it may also be mixed from plural solvents. Such mixing might be a low pressure mixing and provided upstream of the pump 20, so that the pump 20 already receives and pumps the mixed solvents as the mobile phase. Alternatively, the pump 20 might be comprised of plural individual pumping units, with plural of the pumping units each receiving and pumping a different solvent or mixture, so that the mixing of the mobile phase (as received by the separating device 30) occurs at high pressure und downstream of the pump 20 (or as part thereof). The composition (mixture) of the mobile phase may be kept constant over time, the so called isocratic mode, or varied over time, the so called gradient mode.

A data processing unit 70, which can be a conventional PC or workstation, might be coupled (as indicated by the dotted arrows) to one or more of the devices in the liquid separation system 10 in order to receive information and/or control operation. For example, the data processing unit 70 might control operation of the pump 20 (for instance setting control parameters) and receive therefrom information regarding the actual working conditions (such as output pressure, flow rate, etc. at an outlet of the pump). The data processing unit 70 might also control operation of the solvent supply 25 (for instance setting the solvent/s or solvent mixture to be supplied) and/or the degasser 27 (for instance setting control parameters such as vacuum level) and might receive therefrom information regarding the actual working conditions (such as solvent composition supplied over time, flow rate, vacuum level, etc.). The data processing unit 70 might further control operation of the sampling unit 40 (for instance controlling sample injection or synchronization sample injection with operating conditions of the pump 20). The separating device 30 might also be controlled by the data processing unit 70 (for instance selecting a specific flow path or column, setting operation temperature, etc.), and send - in return - information (for instance operating conditions) to the data processing unit 70. Accordingly, the detector 50 might be controlled by the data processing unit 70 (for instance with respect to spectral or wavelength settings, setting time constants, start/stop data acquisition), and send information (for instance about the detected sample compounds) to the data processing unit 70. The data processing unit 70 might also control operation of the fractionating unit 60 (for instance in conjunction with data received from the detector 50) and provides data back.

Reference numeral 90 schematically illustrates a switchable valve which is controllable for selectively enabling or disabling specific fluidic paths within apparatus 10.

**Figure 2** shows the separation section 30 of Figure 1 in further detail and in one specific operation mode.

The device 30 comprises a sample inlet connection 200 via which a fluidic sample may be introduced into the device 30 pumped by fluid pump 20. The various fluidic paths which may be adjusted within the device 30 can be selected by correspondingly switching an outer valve 202 being drivable by an outer rotor. Additionally, an inner valve drivable by an inner rotor is provided which is indicated with reference numeral 204. As can further be taken from Figure 2, the outer valve 202 comprises five grooves 205-209 which can be rotated relative to 10 ports 210-219 thereof. By rotating the grooves 205-209 relative to the ports 210-219, different fluid paths may be adjusted. In a similar way, the inner rotor 204 can be operated by changing positional relationship between three grooves 220-222 and six ports 223-228. The skilled person will understand that the numbers of grooves and ports of the two rotors are only exemplary and that many other architectures of appropriate valve configurations are possible.

Furthermore, an enzyme reactor 230 is provided which is presently connected between ports 210 and 211. Moreover, a protein retention column 232 is provided (for generating a reverse phase) which is configured for selectively trapping certain proteins. In the scenario shown in Figure 2, a fluidic sample is injected via fluid inlet 200, and is conducted via a fluidic path 219, 205, 210, 230, 211, 206, 212, 232, 224, 220, 223 towards a waste 234.

The device 30 is further driven by a nanopump (not shown) which is capable of conducting liquid from an inlet 236 through port 226, groove 221 and port 225 towards a porous graphitized carbon column 238 which is specifically configured for trapping carbohydrates. Hence, a fluidic path 236, 226, 221, 225, 238, 228, 222, 227 is established which is furthermore in fluid communication with a separation column 240 arranged downstream thereof. The separation column 240 also includes porous graphitized carbon. While columns 232, 238 function as trapping columns, column 240 functions as a separation column.

Downstream of the separation column 240, the separated fluidic sample may be supplied to a tip 242 which may be brought in communication with a mass spectroscopy device (not shown) for quantitatively estimating the different fractions of the separated fluidic sample.

Figure 2 shows the device 30, which can be used in the context of a column overfill procedure, in an operation mode during sample injection. As shown schematically by reference numeral 250, the outer rotor 202 provides a fluidic path from the pump 20 connected to fluid inlet 200 via the enzyme reactor 230 and the protein retention column 232 towards waste 234.

Figure 2 shows the device 30 during loading a glycoprotein via the pump 20 (see reference numeral 200), whereas the injection volume is larger than the volume of the enzyme reactor 230. Thus, the enzyme reactor 230 is overfilled so that it can be ensured that a proper amount of sample is on the enzyme reactor 230.

The biochemical reactor 230 is configured for performing a solid phase reaction with the fluidic sample. The enzymatic reactor 230 comprises a solid support 244 and an enzyme 246 immobilized to the solid support 244, as schematically illustrated in Figure 2. The enzyme, for instance PGNase F is in this embodiment configured to be capable of cleaving carbohydrates from glycoproteins which form part of the fluidic sample.

As can be taken from Figure 2, in this operation mode, the fluidic sample is conducted from the fluid inlet 200 to the enzymatic reactor 230 towards the waste 234.

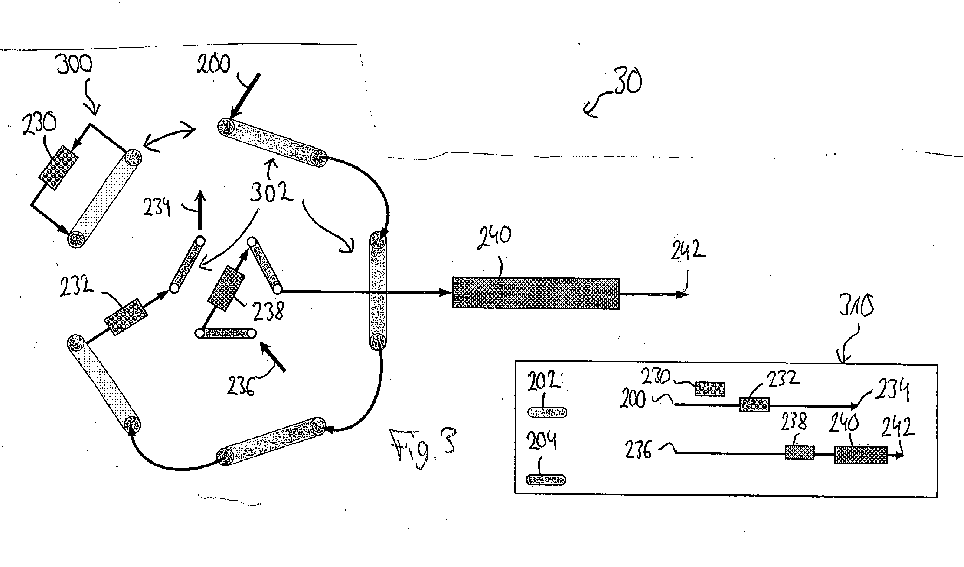

As can be taken from **Figure 3**, the device 30 can also be operated in another operation mode which can also be denoted as a bypass mode.

As can be taken from Figure 3, the enzyme reactor 230 has been separated, together with a bypass path 300, from another fluidic path which will be denoted as flow-through path 302 being configured for conducting a liquid such as the fluidic sample. The bypass path 300 is switchably connectable to/integrable in (see for instance Figure 2) or disconnectable from (see Figure 3) the flow-through path 302 for selectively enabling or disabling fluid communication between the flow-through path 302 and the bypass path 300.

The bypass mode of Figure 3 can be activated by disconnecting the bypass path 300 from the flow-through paths 302. Therefore, fluid communication between the flow-through path 302 and the bypass path 300 is disabled, thereby isolating the bypass path 300 and the fluidic sample in the bypass path 300 which is therefore capable of efficiently performing a biochemical reaction on the enzymatic reactor 230 due to defined and appropriate concentration conditions and therefore with a high reaction rate. The operation mode of Figure 3 can be selected by rotating the outer rotator 202, whereas the inner rotator 204 remains in its initial position of Figure 2.

Heat cut trapping of the glycoprotein may be performed, and deglycosylation may be performed in the bypassed enzymatic reactor 230. During the time interval in which the device 30 remains in the operation state of Figure 3, the solid phase reaction on the enzymatic reactor 230 cleaves the glycoprotein into carbohydrates and carbohydrate free glycoproteins.

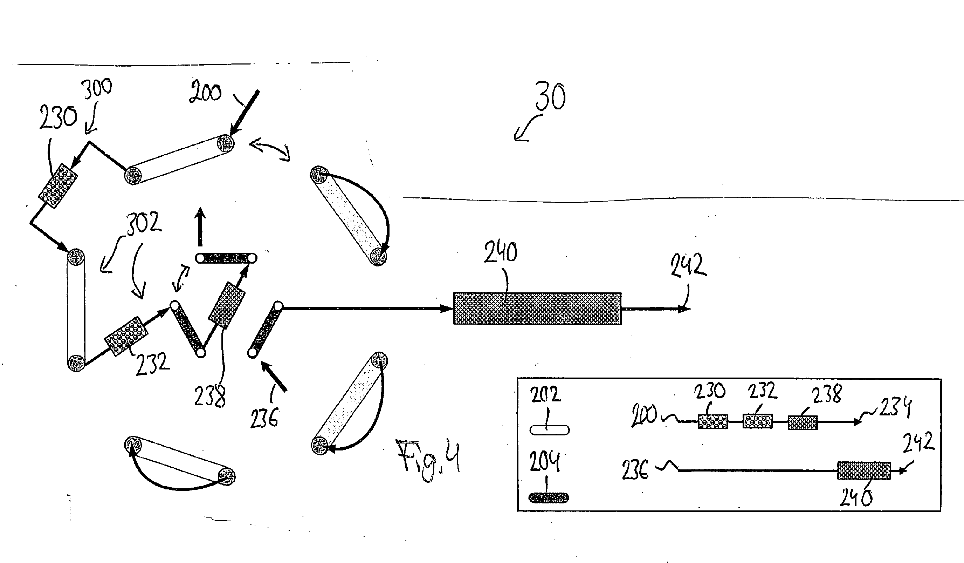

After having maintained the bypass path 300 for a predetermined time interval or until detection of completion of the desired biochemical reaction isolated from the flow-through path 302, another switch operation, now of both rotary valves 202 and 204 is performed to transfer the device 30 in the operation mode shown in **Figure 4**. Hence, when the glycoprotein has performed the solid phase reaction with the enzymes, fluid communication between the flow-through path 302 and the bypass path 300 is re-enabled, thereby integrating the bypass path 300 in the flow-through path 302 for conducting the glycoproteins without the cleaved carbohydrates onto the trapping column 232 and the cleaved carbohydrates onto the trapping column 238. More precisely, the deglycosylated protein is transferred from the enzymatic reactor 230 loop to the respective column 232, and the carbohydrates are transferred to the respective column 238 downstream the bypass path 300. Hence, the deglycosylated protein is trapped on the protein retention column 232, whereas the glycans are trapped on the porous graphitized carbon column 238.

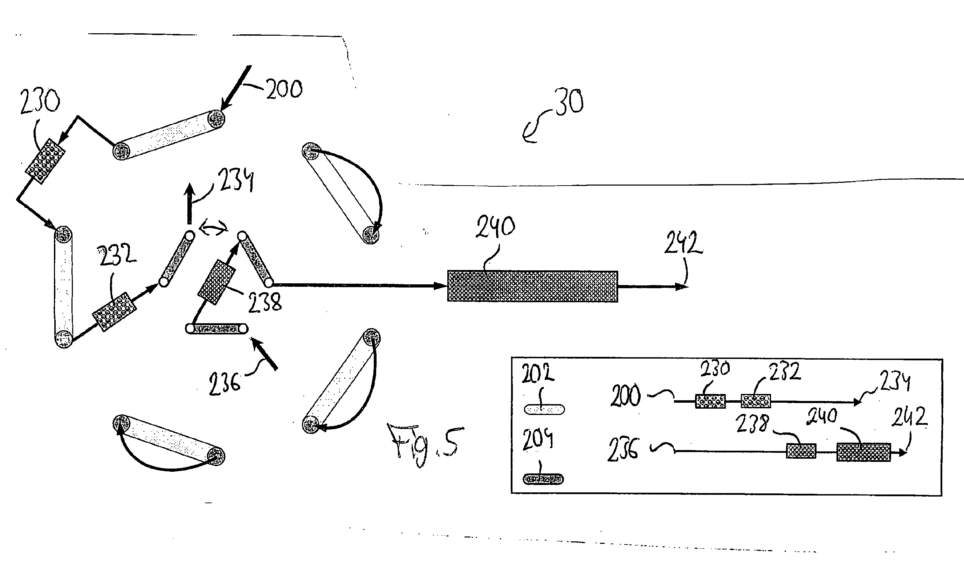

**Figure 5** shows a further operation mode of the device 30. After having trapped the products of the enzymatic reaction on the trapping columns 232 and 238, respectively, the inner rotor 204 is switched again, whereas the outer rotor 202 maintains in its previous state. This results in the operation mode of Figure 5 in which the trapping column 238 is isolated from the trapping column 232. In the path from fluidic sample inlet 200 to the waste 234, a rinsing fluid can be pumped in order to reduce carryover or to clean the components in this path.

In a separate path from nanopump inlet 236 to tip 242, the glycans trapped on trapping column 238 are released and are loaded on separation column 240 for performing a chromatographic separation as known by those skilled in the art. Hence, the glycans can be analyzed, whereas the proteins without the cleaved carbohydrates are pumped to the waste 234. Therefore, the pump sample path is flushed, and a gradient analysis of trapped cleaved glycans can performed with the nanopump connected to inlet 236.

In the following, experimental results will be presented.

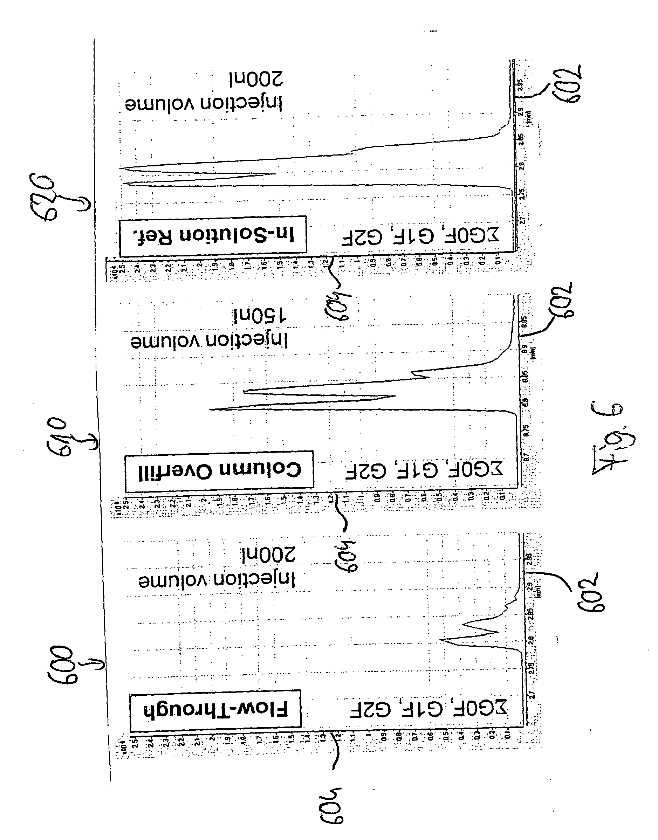

**Figure 6** shows a first diagram 600, a second diagram 610 and a third diagram 620. Each of diagrams 600, 610, 620 has an abscissa 602 along which an acquisition time is plotted in minutes. Along an ordinate 604, a number of counts is plotted. Figure 6 compares results of a flow-through method versus the column overfill method according to an exemplary embodiment. For the shown experiments, the empty enzyme reactor has a volume of 315 nl, and an estimated interparticular porosity is about 50%. A loop size is 150 nl. For the comparison, BL05 from Stratagene has been used. A heat cut time of 1 minute has been selected, a deglycosylation time of 4 minutes and a glycan transfer time of 1 minute. Taken into consideration the difference in injection volume (150 nl versus 200 nl), the column overfill method gives total deglycosylation (see comparison to in-solution reference), whereas the flow-through approach only deglycosylated around 30%.

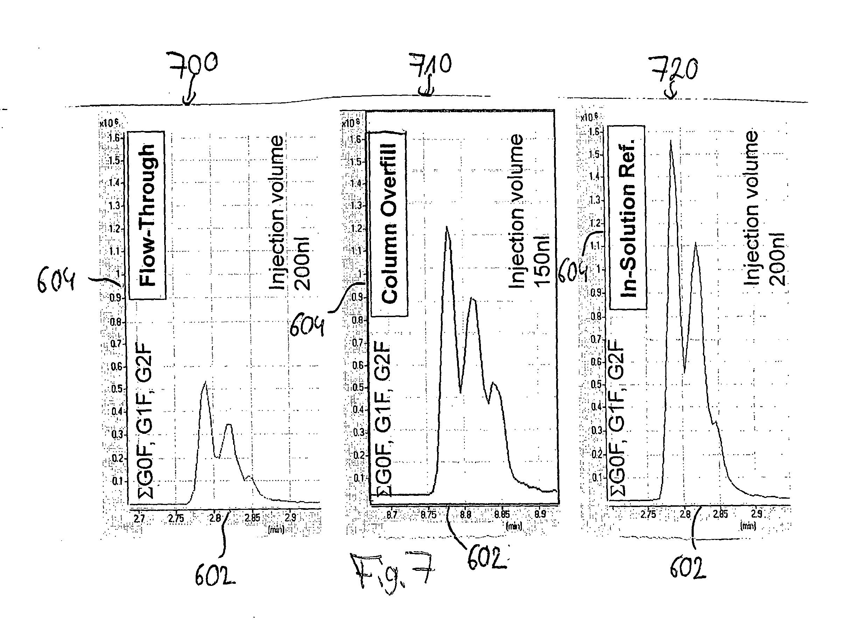

Figure 7 shows corresponding diagrams 700, 710 and 720 illustrating another analysis using Vectibix from Pfizer, and showing again that the column overfill method gives total deglycosylation, whereas the flow-through approach only deglycosylated around 40%.

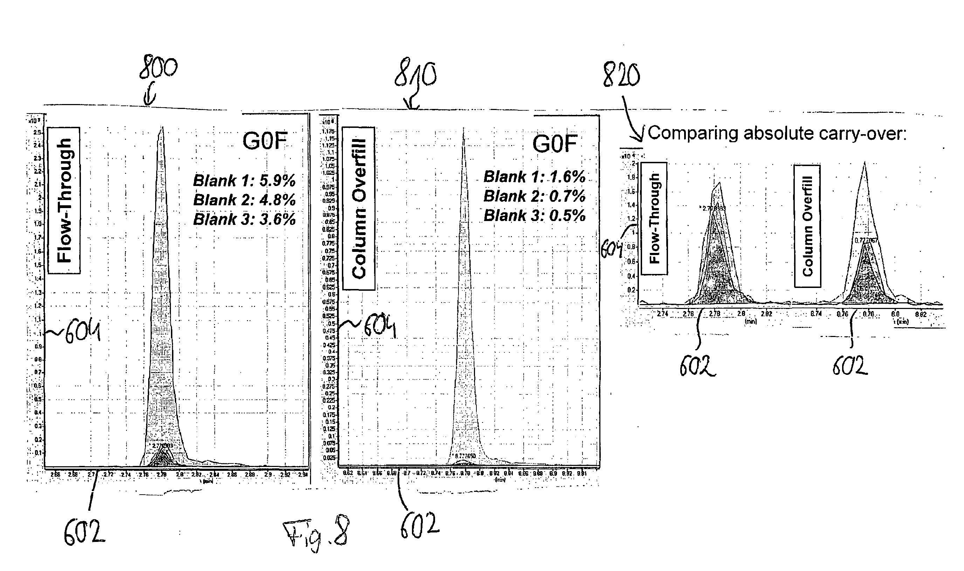

**Figure 8** shows, again for BL05 from Stratagene, corresponding diagrams 800, 810, 820 providing a similar comparison between a flow-through method and a column overfill method being indicative of the carryover performance.

Figure 8 shows that even if the column overfill uses 10 ten times more sample, the absolute carryover signal is comparable and decreases faster in case of column overfill. Consequently, a higher flow rate and thus flush volume may be obtained.

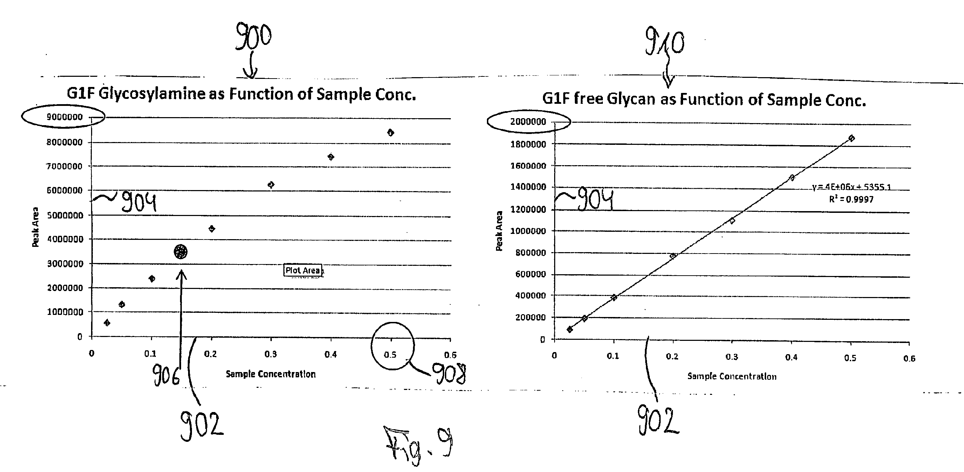

**Figure 9** shows diagrams 900 and 910 both having an abscissa 902 along which the sample concentration is plotted. Along an ordinate 904, a peak area is plotted.

Diagram 900 shows G1F Glycosylamine as a function of the sample concentration, whereas diagram 910 shows G1F-free Glycan as a function of the sample concentration. Using IgG1 Lambda as a sticky sample, accumulation on the enzymatic reactor has been detected. A signal 906 results from 100 ng observed from in-solution experiments. A marker 908 gives an indication without an interaction should give a 75 ng plug.

Figure 9 shows that, in contrast to glycosylamines, the free glycans, which are about 10% of the glycosylamines, give a strict linear behavior (chips with 160 nl PGC enrichment column). Hence, the chip may give any information on absolute glycosylation state of antibodies.

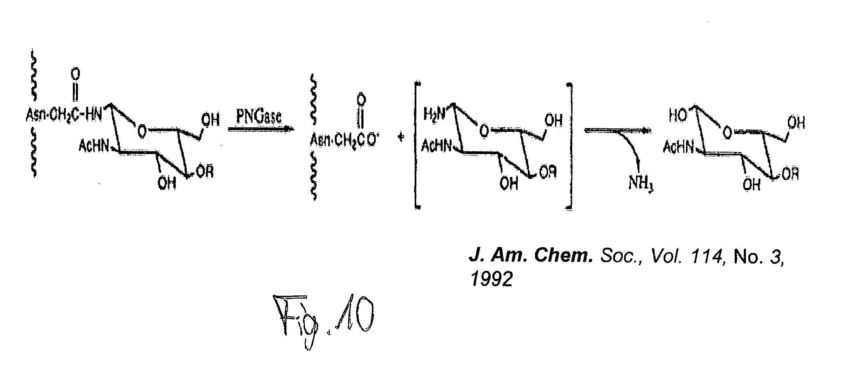

**Figure 10** shows the well-known mechanism of action of PNGase F acting upon a glycoprotein. The result of such an interaction is a protein rest and a carbohydrate.

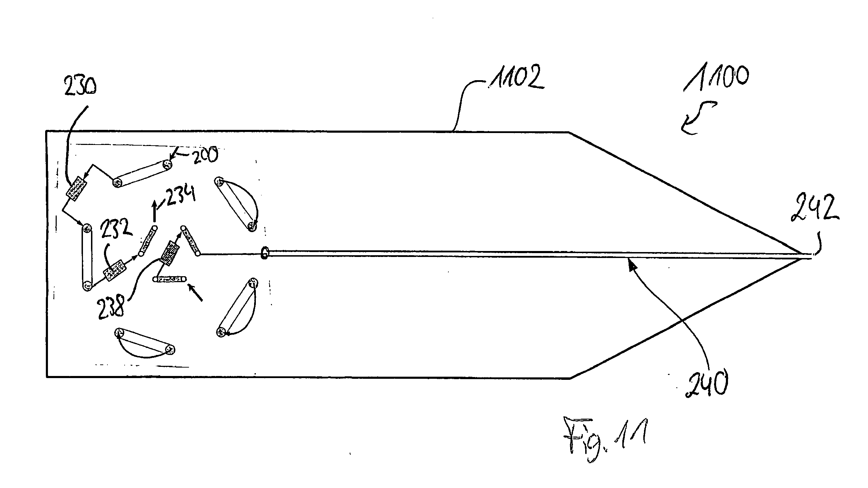

**Figure 11** shows a device 1100 according to another exemplary embodiment which is similar to the embodiment of Figure 2 to Figure 5 in operation, and which is implemented as an integrated analysis chip.

The device 1100 comprises a deglycosylation column or enzymatic reactor 230 for cleaving glycans from glycoprotein samples, and trapping columns 232, 238. These components as well as the outer rotor and the inner rotor are integrated in a laminate substrate 1102, i.e. a multi-layer substrate. The deglycosylation column 230 is configured for cleaving glycans from glycoprotein samples, the trapping column 232 is adapted for trapping and enriching the protein without cleaved glycans, the trapping column 238 is configured for trapping and enriching the cleaved glycans, and the separation column 240 is configured for separating the glycans.

In the following, further biochemical details with regard to glycan analysis with on-chip enzymatic reactions will be mentioned:

With regard to chip fabrication, PNGase F enzyme may be chemically attached to epoxide-modified 5 µm silica beads in phosphate buffer (pH 8) over 22 hr. The beads may then be packed into a chamber located in a first polyimide chip. Reverse-phase 5-µm C8 beads may be packed into a second chamber on a second polyimide chip for protein cleaning. The third chip layer may contain a sample enrichment column (40 nl), a separation column (75 mm) filled with graphitized carbon for HPLC analysis, and an integrated MS tip for input into a mass spectrometer. All three chips may be stacked, aligned and inserted into a chip frame holder.

The antibody samples may be diluted in phosphate buffer to a concentration of 6 pmol/µl in phosphate buffer (pH 7.5). The HPLC system may operate using typical mobile phases of 0.1% formic acid in MS-grade water (Solvent A) and 0.1% formic acid in acetonitrile (Solvent B). The autosampler may be set to inject 0.1 µl of antibody. The capillary pump may be set to pass the sample through the deglycosylation column and a column downstream thereof at a flow rate of 1 µl/min. Solvent which may be used for loading and deglycosylation can be 50 mM sodium phosphate. The gradient for fast deglycosylation and glycan analysis may be 2-32% Solvent B in 1.5 min, 32-75% Solvent B in 30 sec and held at 75% Solvent B for another 30 sec, followed by 75-2% Solvent B over the last 30 sec. with a nano pump flow of 300 nl/min. A longer gradient may be used to separate isomers.

The separated glycans may be analyzed using a QTOF tandem mass spectrometer with an electrospray ionization source. The mass spectra may be recorded in positive ion mode. Voltage of the cap may be set to 1750V, with a drying gas of 325oC at 8 L/min. The fragmentation voltage may be 120V. The skimmer voltage may be 65V. Data may be acquired in 2GHz mode.

Hence, antibody samples may be deglycosylated and the resulting glycans may be separated by HPLC and analyzed by mass spectrometry.

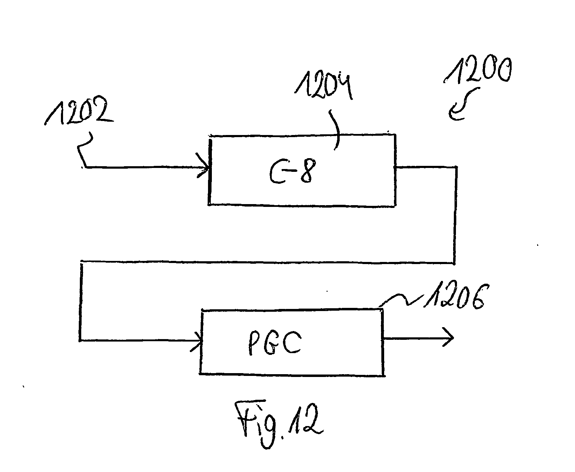

**Figure 12** shows a mobile deglycosylation chip according to another aspect.

In case of the mobile deglycosylation chip 1200 shown in Figure 12, a sample which may comprise glycoprotein is supplied via an inlet 1202. The glycoproteins are bound on a column 1204. Subsequently, a biochemical substance such as an enzyme, more particularly a PNGase F is supplied in solution via the inlet 1202 and is conducted over the column 1204 having the glycoproteins bound thereto. During this procedure, the glycans are cleaved from the glycoproteins, and the cleaved or cut glycans are then trapped by a PGC column 1206 arranged downstream the column 1204. Using the PGC column 1206, the glycans may be analyzed then by a chromatographic method. Subsequently, the column 1204 may be rinsed in order to remove sample and PNGase F.

The system shown in Figure 12 may also be used with other kinds of fluidic samples and with other biochemical reaction molecules.

It should be noted that the term "comprising" does not exclude other elements or features and the "a" or "an" does not exclude a plurality. Also elements described in association with different embodiments may be combined. It should also be noted that reference signs in the claims shall not be construed as limiting the scope of the claims.

## Claims

1. A device (30) for handling a fluidic sample, the device (30) comprising:
a flow-through path (302) configured for conducting the fluidic sample;
a bypass path (300) being switchably connectable to or disconnectable from the flow-through path (302) for selectively enabling or disabling fluid communication between the flow-through path (302) and the bypass path (300);
a chemical reactor (230) arranged in the bypass path (300) and being
configured for performing a solid phase reaction with the fluidic sample in an isolated state where the bypass path (300) is disconnected from the flow-through path (302);
a switchable valve (202, 204) for selectively enabling or disabling fluid communication between the flow-through path (302) and the bypass path (300);
a control unit specially adapted for triggering switching of the switchable valve so as to disconnect the bypass path (300) from the flow-through path (302) for disabling fluid communication between the flow-through path (302) and the bypass path (300), thereby isolating the bypass path (300) and the fluidic sample in the bypass path (300), and maintain the bypass path (300) in the isolated state for a predefined time interval or until determining that the fluidic sample has performed the solid phase reaction at least to a predefined amount;
a first separation unit (232) arranged in the flow-through path (302) downstream the bypass path (300) for trapping a fraction produced by an interaction between the fluidic sample and the chemical reactor (230).

2. The device (30) of claim 1, comprising at least one of the following features:
the device (30) comprises the first separation unit (232) arranged in the flow-through path (302) downstream the bypass path (300) for trapping a fraction produced by an interaction between the fluidic sample and the chemical reactor (230), and comprises a second separation unit (238) arranged in the flow-through path (302) downstream the first separation unit (232) for trapping another fraction produced by the interaction between the fluidic sample and the chemical reactor (230);
the device (30) comprises the first separation unit (232) arranged in the flow-through path (302) downstream the bypass path (300) for trapping a fraction produced by an interaction between the fluidic sample and the chemical reactor (230), comprises a second separation unit (238) arranged in the flow-through path (302) downstream the first separation unit (232) for trapping another fraction produced by the interaction between the fluidic sample and the chemical reactor (230), and comprises a third separation unit (240) arranged in the flow-through path (302) downstream the second separation unit (238) for analyzing the other fraction;
the device (30) comprises the first separation unit (232) arranged in the flow-through path (302) downstream the bypass path (300) for trapping a fraction produced by an interaction between the fluidic sample and the chemical reactor (230), comprises a second separation unit (238) arranged in the flow-through path (302) downstream the first separation unit (232) for trapping another fraction produced by the interaction between the fluidic sample and the chemical reactor (230), and comprises a third separation unit (240) arranged in the flow-through path (302) downstream the second separation unit (238) for analyzing the other fraction, wherein the device (30) is switchable for selectively enabling or disabling fluid communication between the second separation unit (238) and the third separation unit (240);

3. The device (30) of the preceding claim, wherein at least one of the separation units (232, 238, 240) is a chromatographic separation column.

4. The device (30) of claim 1 or any one of the above claims, comprising the switchable valve (202, 204) for
selectively enabling or disabling fluid communication between different separation units (232, 238, 240), particularly between the second separation unit (238) and the third separation unit (240).

5. The device (30) of claim 1 or any one of the above claims, comprising at least one of the following features:
the switchable valve (202, 204) is a rotary valve;
the switchable valve comprises a first switch mechanism (202) for enabling or
disabling fluid communication between the flow-through path (302) and the bypass path (300), and an independently operable second switch mechanism (204) for enabling or disabling fluid communication between different separation units (232, 238, 240), particularly between the second separation unit (238) and the third separation unit (240);
the switchable valve comprises a first switch mechanism (202) for enabling or
disabling fluid communication between the flow-through path (302) and the bypass path (300), and an independently operable second switch mechanism (204) for enabling or disabling fluid communication between different separation units (232, 238, 240), particularly between the second separation unit (238) and the third separation unit (240), wherein the first switch mechanism (202) is an outer rotary mechanism arranged around a circumference of the second switch mechanism (204) being an inner rotary mechanism;
the valve (202, 204) comprises a first valve member and a second valve member, wherein at least one of the first and second valve members is adapted to be moved with respect to the other, one of the first and second valve members comprises a plurality of ports (210 to 219), and the other comprises at least one groove (205 to 209) for fluidly coupling respective ones of the ports (210 to 219) in dependency on a relative movement position of the first and second valve members with respect to each other;
the valve (202, 204) comprises a first valve member and a second valve member, wherein at least one of the first and second valve members is adapted to be moved with respect to the other, one of the first and second valve members comprises a plurality of ports (210 to 219), and the other comprises at least one groove (205 to 209) for fluidly coupling respective ones of the ports (210 to 219) in dependency on a relative movement position of the first and second valve members with respect to each other, wherein the valve (202, 204) further comprises a third valve member and a fourth valve member, wherein at least one of the third and fourth valve members is adapted to be moved with respect to the other, one of the third and fourth valve members comprises a plurality of ports (223 to 228), and the other comprises at least one groove (220 to 222) for fluidly coupling respective ones of the ports (223 to 228) in dependency on a relative movement position of the third and fourth valve members with respect to each other.

6. The device (30) of claim 1 or any one of the above claims, comprising at least one of the following features:
the chemical reactor (230) is a biochemical reactor (230);
the chemical reactor (230) is an encymatic reactor;
the chemical reactor (230) is a catalytic reactor;
the chemical reactor (230) comprises a solid support (244) and chemically active particles (246) immobilized on the solid support (244);
the chemical reactor (230) comprises a deglycosylation unit comprising a solid support (244) and an enzyme (246) immobilized to the solid support (244),
wherein the enzyme (246) is capable of cleaving carbohydrates from glycoproteins;
the chemical reactor (230) comprises an amino acid cleaving unit comprising a solid support (244) and an enzyme (246) immobilized to the solid support (244), wherein the enzyme (246) comprises trypsin;
the bypass path (300) is an annular fluidic path when being disconnected from the flow-through path (302);
the flow-through path (302) comprises an inlet (200) for supplying the fluidic sample and comprises at least one outlet (234) for draining the fluidic sample or a fraction or section thereof after having passed at least a part of the flow-through path (302) with or without having passed at least a part of the bypass path (300);
the device (1100) comprises a substrate (1102), wherein at least a part,
particularly all, of the components of the device (1100) are integrated in the substrate (1102);
the device (30) comprises tubular fluid channels for providing a fluidic connection between at least a part, particularly all, of the components of the device (30) being provided as separate or separable physical structures;
the bypass path (300) and the flow-through path (302) are switchably connectable so that the fluidic sample is enabled to flow along a fluidic path comprising at least a part of the flow-through path (302) and at least a part of the bypass path (300);
the device (30) is adapted to conduct a liquid at a high pressure at which compressibility of the liquid becomes noticeable;
the device (30) is adapted to conduct a liquid at a high pressure in a range of 20-200 MPa, and particularly 50-120 MPa;
the device (30) comprises a mobile phase drive (20), particularly a pumping system, adapted to conduct the fluidic sample through at least one of the flow-through path (302) and the bypass path (300);
the device (30) comprises a detector (50) adapted to detect separated compounds of the fluidic sample;
the device (30) comprises a collection unit (60) adapted to collect separated compounds of the fluidic sample.

7. A method of handling a fluidic sample, the method comprising:
conducting the fluidic sample from a flow-through path (302) to a bypass path (300) being in fluid communication with the flow-through path (302);
disconnecting the bypass path (300) from the flow-through path (302) for disabling fluid communication between the flow-through path (302) and the bypass path (300), thereby isolating the bypass path (300) and the fluidic sample in the bypass path (300);
in the isolated state, performing a solid phase reaction between a chemical reactor (230) arranged in the bypass path (300) and the fluidic sample;
maintaining the bypass path (300) in the isolated state for a predefined time interval or until determining that the fluidic sample has performed the solid phase reaction at least to a predefined amount;
trapping a fraction produced by an interaction between the fluidic sample and
the chemical reactor (230) in a first separation unit (232) arranged in the flow-through path (302) downstream the bypass path (300).

8. The method of claim 7, wherein performing the solid phase reaction transforms, particularly cleaves, the fluidic sample into a first fraction and a second fraction.

9. The method of claims 8, wherein the method comprises, when the predefined time interval has expired or the fluidic sample has performed the solid phase reaction at least to the predefined amount, re-enabling fluid communication between the flow-through path (302) and the bypass path (300), thereby conducting the first fraction and the second fraction onto a first separation unit (232) for trapping the first fraction while allowing the second fraction to pass the first separation unit (232).

10. The method of the preceding claim, comprising at least one of the following features:
the method comprises, while the bypass path (300) is isolated, conducting fluidic sample or a solvent through the flow-through path (302) to the first separation unit (232);
the re-enabling of the fluid communication is performed to conduct the second fraction onto a second separation unit (238) for selectively trapping the second fraction.

11. The method of the preceding claim, wherein the re-enabling of the fluid communication is performed to thereby conduct other fractions of the fluidic sample to a drain (234).

12. The method of claim 10 or any one of the above claims, comprising switching the second separation unit (238) in fluid communication with a third separation unit (240) and disabling fluid communication between the first separation unit (232) and the second separation unit (238).

13. The method of the preceding claim, comprising releasing the second fraction from the second separation unit (238) and conducting the second fraction towards the third separation unit (240).

14. The method of claim 7 or any one of the above claims, comprising at least one of the following features:
conducting the fluidic sample comprises loading a part of the fluidic sample on the chemical reactor (230) and conducting another part of the fluidic sample to a drain (234);
the disconnecting comprises temporarily disconnecting the bypass path (300) from any mobile phase drive (20), particularly from any pumping system being connected or connectable to the flow-through path (302);
the fluidic sample comprises glycoproteins;
the chemical reactor (230) comprises a deglycosylation unit comprising a solid support (244) and an enzyme (246) immobilized to the solid support (244),
wherein the enzyme is capable of cleaving carbohydrates from glycoproteins;
the first fraction comprises glycoproteins being at least partially free of carbohydrates;
the second fraction comprises carbohydrates.

## Patentansprüche

1. Eine Vorrichtung (30) zum Handhaben einer fluidischen Probe, wobei die Vorrichtung (30) aufweist:
einen Durchfluss Pfad (302), welcher konfiguriert ist zum Leiten der fluidischen Probe;
einen Überbrückungspfad (300), welcher schaltbar verbindbar mit oder trennbar von dem Durchfluss Pfad (302) ist zum selektiven Freigeben oder Sperren einer Fluidverbindung zwischen dem Durchfluss Pfad (302) und dem Überbrückungspfad (300);
einen chemischen Reaktor (230), welcher in dem Überbrückungspfad (300) angeordnet ist und welcher konfiguriert ist zum Ausführen einer Festphasen Reaktion mit der fluidischen Probe in einem isolierten Zustand, wobei der Überbrückungspfad (300) getrennt ist von dem Durchfluss Pfad (302);
ein schaltbares Ventil (202, 204) zum selektiven Freigeben oder Sperren der Fluidverbindung zwischen dem Durchfluss Pfad (302) und dem Überbrückungspfad (300);
eine Steuereinheit, welche speziell eingerichtet ist zum Auslösen eines Schaltens des schaltbaren Ventils, um den Überbrückungspfad (300) von dem Durchfluss Pfad (302) zu trennen zum Sperren der Fluidverbindung zwischen dem Durchfluss Pfad (302) und dem Überbrückungspfad (300), wobei dabei der Überbrückungspfad (300) und die fluidische Probe in dem Überbrückungspfad (300) isoliert werden, und um den Überbrückungspfad (300) in dem isolierten Zustand zu halten für ein vorbestimmtes Zeitintervall oder bis zu einem Bestimmen, dass die fluidische Probe die Festphasen Reaktion zumindest bis zu einem vorbestimmten Umfang ausgeführt hat;
eine erste Trenneinheit (232), welche in dem Durchflusspfad (302) stromabwärts von dem Überbrückungspfad (300) angeordnet ist zum Auffangen einer Fraktion, die mittels einer Interaktion zwischen der fluidischen Probe und dem chemischen Reaktor (230) erzeugt wird.

2. Die Vorrichtung (30) gemäß Anspruch 1, aufweisend zumindest eines der folgenden Merkmale:
die Vorrichtung (30) weist auf
die erste Trenneinheit (232), welche in dem Durchfluss Pfad (302) stromabwärts des Überbrückungspfads (300) angeordnet ist zum Auffangen einer Fraktion, welche mittels einer Interaktion zwischen der fluidischen Probe und dem chemischen Reaktor (230) erzeugt wird, und weist auf
eine zweite Trenneinheit (238), welche in dem Durchfluss Pfad (302) stromabwärts der ersten Trenneinheit (232) angeordnet ist, zum Auffangen einer anderen Fraktion, welche mittels der Interaktion zwischen der fluidischen Probe und dem chemischen Reaktor (230) erzeugt wird;
die Vorrichtung (30) weist auf
die erste Trenneinheit (232), welche in dem Durchfluss Pfad (302) stromabwärts des Überbrückungspfads (300) angeordnet ist, zum Auffangen einer Fraktion, welche mittels einer Interaktion zwischen der fluidischen Probe und dem chemischen Reaktor (230) erzeugt wird,
die zweite Trenneinheit (238), welche in dem Durchfluss Pfad (302) stromabwärts der ersten Trenneinheit (232) angeordnet ist, zum Auffangen einer anderen Fraktion, welche mittels der Interaktion zwischen der fluidischen Probe und dem chemischen Reaktor (230) erzeugt wird, und
eine dritte Trenneinheit (240), welche in dem Durchfluss Pfad (302) stromabwärts der zweiten Trenneinheit (238) angeordnet ist zum Analysieren der anderen Fraktion;
die Vorrichtung (30) weist auf
die erste Trenneinheit (232), welche in dem Durchfluss Pfad (302) stromabwärts des Überbrückungspfads (300) angeordnet ist zum Auffangen einer Fraktion, welche mittels einer Interaktion zwischen der fluidischen Probe und dem chemischen Reaktor (230) erzeugt wird,
eine zweite Trenneinheit (238), welche in dem Durchfluss Pfad (302) stromabwärts der ersten Trenneinheit (232) angeordnet ist, zum Auffangen einer anderen Fraktion, welche mittels der Interaktion zwischen der fluidischen Probe und dem chemischen Reaktor (230) erzeugt wird, und
eine dritte Trenneinheit (240), welche in dem Durchfluss Pfad (302) stromabwärts der zweiten Trenneinheit (238) angeordnet ist zum Analysieren der anderen Fraktion, wobei die Vorrichtung (30) schaltbar ist zum selektiven Freigeben oder Sperren der Fluidverbindung zwischen der zweiten Trenneinheit (238) und der dritten Trenneinheit (240).

3. Die Vorrichtung (30) gemäß dem vorangehenden Anspruch, wobei zumindest eine der Trenneinheiten (232, 238, 240) eine chromatographische Trennsäule ist.

4. Die Vorrichtung (30) gemäß Anspruch 1 oder irgendeinem der obigen Ansprüche, aufweisend das schaltbare Ventil (202, 204) zum
selektiven Freigeben oder Sperren der Fluidverbindung zwischen verschiedenen Trenneinheiten (232, 238, 240), insbesondere zwischen der zweiten Trenneinheit (238) und der dritten Trenneinheit (240).

5. Die Vorrichtung (30) gemäß Anspruch 1 oder irgendeinem der obigen Ansprüche, aufweisend zumindest eines der folgenden Merkmale:
das schaltbare Ventil (202, 204) ist ein Drehventil;
das schaltbare Ventil weist auf
einen ersten Schaltmechanismus (202) zum Freigeben oder Sperren der Fluidverbindung zwischen dem Durchfluss Pfad (302) und dem Überbrückungspfad (300), und
einen unabhängig funktionsfähigen zweiten Schaltmechanismus (204) zum Freigeben oder Sperren der Fluidverbindung zwischen verschiedenen Trenneinheiten (232, 238, 240), insbesondere zwischen der zweiten Trenneinheit (238) und der dritten Trenneinheit (240);
das schaltbare Ventil weist auf
einen ersten Schaltmechanismus (202) zum Freigeben oder Sperren der Fluidverbindung zwischen dem Durchfluss Pfad (302) und dem Überbrückungspfad (300), und
einen unabhängig funktionsfähigen zweiten Schaltmechanismus (204) zum Freigeben oder Sperren der Fluidverbindung zwischen verschiedenen Trenneinheiten (232, 238, 240), insbesondere zwischen der zweiten Trenneinheit (238) und der dritten Trenneinheit (240), wobei der erste Schaltmechanismus (202) ein äußerer Drehmechanismus ist, welcher um einen Umfang des zweiten Schaltmechanismus (204) herum angeordnet ist, welcher ein innerer Drehmechanismus ist;
das Ventil (202, 204) weist ein erstes Ventil Element und ein zweite Ventil Element auf, wobei zumindest eines des ersten und des zweiten Ventil Elements eingerichtet ist, um in Hinsicht auf das andere bewegt zu werden, wobei eines des ersten und des zweiten Ventil Elements eine Mehrzahl von Anschlüssen (210 bis 219) aufweist, und das andere zumindest eine Nut (205 bis 209) aufweist zum fluidischen Koppeln der jeweiligen der Anschlüsse (210 bis 219) in Abhängigkeit von einer relativen Bewegungsposition des ersten und zweiten Ventil Elements in Hinsicht aufeinander;
das Ventil (202, 204) weist ein erstes Ventil Element und ein zweites Ventil Element auf, wobei zumindest eines des ersten und zweiten Ventil Elements eingerichtet ist, um in Hinsicht auf das andere bewegt zu werden, wobei eines des ersten und zweiten Ventil Elements eine Mehrzahl von Anschlüssen (210 bis 219) aufweist und das andere zumindest eine Nut (205 bis 209) aufweist zum fluidischen Koppeln jeweiliger der Anschlüsse (210 bis 219) in Abhängigkeit von einer relativen Bewegungsposition des ersten und zweiten Ventil Elements in Hinsicht aufeinander, wobei das Ventil (202, 204) ferner ein drittes Ventil Element und ein viertes Ventil Element aufweist, wobei zumindest eines des dritten und vierten Ventil Elements eingerichtet ist, um in Hinsicht auf das andere bewegt zu werden, wobei eines des dritten und des vierten Ventil Elements eine Mehrzahl von Anschlüssen (223 bis 228) aufweist, und das andere zumindest eine Nut (220 bis 222) aufweist zum fluidischen Koppeln jeweiliger der Anschlüsse (223 bis 228) in Abhängigkeit von einer relativen Bewegungsposition des dritten und vierten Ventil Elements in Hinsicht aufeinander.

6. Die Vorrichtung (30) gemäß Anspruch 1 oder irgendeinem der obigen Ansprüche, aufweisend zumindest eines der folgenden Merkmale:
der chemische Reaktor (230) ist ein biochemischer Reaktor (230);
der chemische Reaktor (230) ist ein enzymatischer Reaktor;
der chemische Reaktor (230) ist ein katalytischer Reaktor;
der chemische Reaktor (230) weist ein festes Stützmittel (244) und chemisch aktive Partikel (246) auf, welche auf dem festen Stützmittel (244) immobilisiert sind;
der chemische Reaktor (230) weist auf
eine Deglykosylierungseinheit, welche ein festes Stützmittel (244) und ein Enzym (246) aufweist, welches an dem festen Stützmittel (244) immobilisiert ist, wobei das Enzym (246) geeignet ist, um Kohlenhydrate von Glykoproteinen zu spalten;
der chemische Reaktor (230) weist eine Aminosäure Spalteinheit auf, welche ein festes Stützmittel (244) und ein Enzym (246) aufweist, welches an dem festen Stützmittel (244) immobilisiert ist, wobei das Enzym (246) Trypsin aufweist;
der Überbrückungspfad (300) ist ein ringförmiger fluidischer Pfad, wenn er von dem Durchfluss Pfad (302) getrennt ist;
der Durchfluss Pfad (302) weist einen Einlass (200) auf zum Bereitstellen der fluidischen Probe und weist zumindest einen Auslass (234) auf zum Auslassen der fluidischen Probe oder einer Fraktion oder einer Sektion davon, nachdem sie zumindest einen Teil des Durchfluss Pfads (302) durchlaufen hat, mit oder ohne dass sie zumindest einen Teil des Überbrückungspfads (300) durchlaufen hat;
die Vorrichtung (1100) weist ein Substrat (1102) auf, wobei zumindest ein Teil, insbesondere alle der Komponenten der Vorrichtung (1100) in dem Substrat (1102) integriert sind;
die Vorrichtung (30) weist schlauchförmige Fluid Kanäle auf zum Bereitstellen einer Fluidverbindung zwischen zumindest einem Teil, insbesondere allen der Komponenten der Vorrichtung (30), welche als getrennte oder trennbare physische Strukturen bereitgestellt sind;
der Überbrückungspfad (300) und der Durchfluss Pfad (302) sind schaltbar verbindbar, so dass der fluidischen Probe ermöglicht ist, entlang eines fluidischen Pfads zu strömen, welcher zumindest einen Teil des Durchfluss Pfads (302) und zumindest einen Teil des Überbrückungspfads (300) aufweist;
die Vorrichtung (30) ist eingerichtet, um eine Flüssigkeit bei einem hohen Druck zu leiten, bei welchem die Kompressibilität der Flüssigkeit bemerkbar wird;
die Vorrichtung (30) ist eingerichtet, um eine Flüssigkeit bei einem hohen Druck in einem Bereich von 20-200 MPa, und insbesondere 50-120 MPa, zu leiten;
die Vorrichtung (30) weist einen mobile Phase Antrieb (20) auf, insbesondere ein Pumpsystem, welches eingerichtet ist, um die fluidische Probe durch zumindest einen des Durchfluss Pfads (302) und des Überbrückungspfads (300) hindurch zu leiten;
die Vorrichtung (30) weist einen Detektor (50) auf, welcher eingerichtet ist, um getrennte Komponenten der fluidischen Probe zu detektieren;
die Vorrichtung (30) weist eine Sammeleinheit (60) auf, welche eingerichtet ist, um die getrennten Komponenten der fluidischen Probe zu sammeln.

7. Ein Verfahren zum Handhaben einer fluidischen Probe, wobei das Verfahren aufweist:
Leiten der fluidischen Probe von einem Durchfluss Pfad (302) zu einem Überbrückungspfad (300), welcher in einer Fluidverbindung mit dem Durchfluss Pfad (302) ist;
Trennen des Überbrückungspfads (300) von dem Durchfluss Pfad (302) zum Sperren der Fluidverbindung zwischen dem Durchfluss Pfad (302) und dem Überbrückungspfad (300), wobei dabei der Überbrückungspfad (300) und die fluidische Probe in dem Überbrückungspfad (300) isoliert werden;
in dem isolierten Zustand, Ausführen einer Festphasen Reaktion zwischen einem chemischen Reaktor (230), welcher in dem Überbrückungspfad (300) angeordnet ist, und der fluidischen Probe;
Halten des Überbrückungspfads (300) in dem isolierten Zustand für ein vorbestimmtes Zeitintervall oder bis zu einem Bestimmen, dass die fluidische Probe die Festphasen Reaktion zumindest bis zu einer vorbestimmten Menge ausgeführt hat;
Auffangen einer Fraktion, die mittels einer Interaktion zwischen der fluidischen Probe und dem chemischen Reaktor (230) in einer ersten Trenneinheit (232) erzeugt wird, welche in dem Durchfluss Pfad (302) stromabwärts des Überbrückungspfads (300) angeordnet ist.

8. Das Verfahren gemäß Anspruch 7, wobei das Ausführen der Festphasen Reaktion die fluidische Probe in eine erste Fraktion und eine zweite Fraktion transformiert, insbesondere spaltet.

9. Das Verfahren gemäß Anspruch 8, wobei das Verfahren aufweist
wenn das vordefinierte Zeitintervall abgelaufen ist oder die fluidische Probe die Festphasen Reaktion zumindest bis zu der vorbestimmten Menge ausgeführt hat, Wieder-Freigeben der Fluidverbindung zwischen dem Durchfluss Pfad (302) und dem Überbrückungspfad (300), dabei Leiten der ersten Fraktion und der zweiten Fraktion auf eine erste Trenneinheit (232) zum Auffangen der ersten Fraktion, während eines Ermöglichens der zweiten Fraktion, die erste Trenneinheit (232) zu durchlaufen.

10. Das Verfahren gemäß dem vorangehenden Anspruch, aufweisend zumindest eines der folgenden Merkmale:
das Verfahren weist auf, während der Überbrückungspfad (300) isoliert ist, Leiten der fluidischen Probe oder eines Lösungsmittels durch den Durchfluss Pfad (302) hindurch zu der ersten Trenneinheit (232);
das Wieder-Freigeben der Fluidverbindung wird ausgeführt, um die zweite Fraktion auf eine zweite Trenneinheit (238) zu leiten zum selektiven Auffangen der zweiten Fraktion.

11. Das Verfahren gemäß dem vorangehenden Anspruch, wobei das Wieder-Freigeben der Fluidverbindung ausgeführt wird, um dabei andere Fraktionen der fluidischen Probe zu einem Abfluss (234) zu leiten.

12. Das Verfahren gemäß Anspruch 10 oder irgendeinem der obigen Ansprüche, aufweisend Schalten der zweiten Trenneinheit (238) in die Fluidverbindung mit einer dritten Trenneinheit (240) und Sperren der Fluidverbindung zwischen der ersten Trenneinheit (232) und der zweiten Trenneinheit (238).

13. Das Verfahren gemäß dem vorangehenden Anspruch, aufweisend ein Lösen der zweiten Fraktion von der zweiten Trenneinheit (238) und Leiten der zweiten Fraktion zu der dritten Trenneinheit (240) hin.

14. Das Verfahren gemäß Anspruch 7 oder irgendeinem der obigen Ansprüche, aufweisend zumindest eines der folgenden Merkmale:
Das Leiten der fluidischen Probe weist auf
ein Laden eines Teils der fluidischen Probe auf den chemischen Reaktor (230) und
ein Leiten eines anderen Teils der fluidischen Probe zu einem Abfluss (234);
das Trennen weist auf ein zeitweises Trennen des Überbrückungspfads (300) von irgendeinem mobile Phasen Antrieb (20), insbesondere von irgendeinem Pumpsystem, welches mit dem Durchfluss Pfad (302) verbunden oder verbindbar ist;
die fluidische Probe weist Glykoproteine auf;
der chemische Reaktor (230) weist eine Deglykosylierungseinheit auf, welche ein festes Stützmittel (244) und ein Enzym (246) aufweist, welches an dem festen Stützmittel (244) immobilisiert ist, wobei das Enzym geeignet ist, um Kohlenhydrate von Glykoproteinen zu spalten;
die erste Fraktion weist Glykoproteine auf, die zumindest teilweise frei von Kohlenhydraten sind;
die zweite Fraktion weist Kohlenhydrate auf.

## Revendications

1. Dispositif (30) de gestion d'un échantillon fluidique, le dispositif (30) comprenant :
une voie d'écoulement (302) configurée pour conduire l'échantillon fluidique ;
une voie de dérivation (300) qui peut être de façon commutable branchée à la voie d'écoulement (302) ou débranchée de celle-ci pour activer ou désactiver sélectivement une communication fluidique entre la voie d'écoulement (302) et la voie de dérivation (300) ;
un réacteur chimique (230) agencé dans la voie de dérivation (300) et configuré pour réaliser une réaction en phase solide avec l'échantillon fluidique dans un état isolé où la voie de dérivation (300) est débranchée de la voie d'écoulement (302) ;
une vanne commutable (202, 204) pour activer ou désactiver sélectivement une communication fluidique entre la voie d'écoulement (302) et la voie de dérivation (300) ;
une unité de commande spécialement adaptée pour déclencher la commutation de la vanne commutable de façon à débrancher la voie de dérivation (300) de la voie d'écoulement (302) pour désactiver une communication fluidique entre la voie d'écoulement (302) et la voie de dérivation (300), isolant ainsi la voie de dérivation (300) et l'échantillon fluidique dans la voie de dérivation (300), et maintenir la voie de dérivation (300) dans l'état isolé pendant un intervalle de temps prédéfini ou jusqu'à détermination que l'échantillon fluidique a réalisé la réaction en phase solide au moins jusqu'à une quantité prédéfinie ;
une première unité de séparation (232) agencée dans la voie d'écoulement (302) en aval de la voie de dérivation (300) pour piéger une fraction produite par une interaction entre l'échantillon fluidique et le réacteur chimique (230).

2. Dispositif (30) selon la revendication 1, comprenant au moins l'une des particularités suivantes :
le dispositif (30) comprend la première unité de séparation (232) agencée dans la voie d'écoulement (302) en aval de la voie de dérivation (300) pour piéger une fraction produite par une interaction entre l'échantillon fluidique et le réacteur chimique (230), et comprend une deuxième unité de séparation (238) agencée dans la voie d'écoulement (302) en aval de la première unité de séparation (232) pour piéger une autre fraction produite par l'interaction entre l'échantillon fluidique et le réacteur chimique (230) ;
le dispositif (30) comprend la première unité de séparation (232) agencée dans la voie d'écoulement (302) en aval de la voie de dérivation (300) pour piéger une fraction produite par une interaction entre l'échantillon fluidique et le réacteur chimique (230), comprend une deuxième unité de séparation (238) agencée dans la voie d'écoulement (302) en aval de la première unité de séparation (232) pour piéger une autre fraction produite par l'interaction entre l'échantillon fluidique et le réacteur chimique (230), et comprend une troisième unité de séparation (240) agencée dans la voie d'écoulement (302) en aval de la deuxième unité de séparation (238) pour analyser l'autre fraction ;
le dispositif (30) comprend la première unité de séparation (232) agencée dans la voie d'écoulement (302) en aval de la voie de dérivation (300) pour piéger une fraction produite par une interaction entre l'échantillon fluidique et le réacteur chimique (230), comprend une deuxième unité de séparation (238) agencée dans la voie d'écoulement (302) en aval de la première unité de séparation (232) pour piéger une autre fraction produite par l'interaction entre l'échantillon fluidique et le réacteur chimique (230), et comprend une troisième unité de séparation (240) agencée dans la voie d'écoulement (302) en aval de la deuxième unité de séparation (238) pour analyser l'autre fraction, dans lequel le dispositif (30) est commutable pour activer ou désactiver sélectivement une communication fluidique entre la deuxième unité de séparation (238) et la troisième unité de séparation (240).

3. Dispositif (30) selon la revendication précédente, dans lequel au moins l'une des unités de séparation (232, 238, 240) est une colonne de séparation chromatographique.

4. Dispositif (30) selon la revendication 1 ou l'une quelconque des revendications précédentes, comprenant la vanne commutable (202, 204) pour
activer ou désactiver sélectivement une communication fluidique entre différentes unités de séparation (232, 238, 240), en particulier entre la deuxième unité de séparation (238) et la troisième unité de séparation (240).

5. Dispositif (30) selon la revendication 1 ou l'une quelconque des revendications précédentes, comprenant au moins l'une des particularités suivantes :
la vanne commutable (202, 204) est une vanne rotative ;
la vanne commutable comprend un premier mécanisme de commutation (202) pour activer ou désactiver une communication fluidique entre la voie d'écoulement (302) et la voie de dérivation (300), et un second mécanisme de commutation (204) actionnable indépendamment pour activer ou désactiver une communication fluidique entre différentes unités de séparation (232, 238, 240), en particulier entre la deuxième unité de séparation (238) et la troisième unité de séparation (240) ;
la vanne commutable comprend un premier mécanisme de commutation (202) pour activer ou désactiver une communication fluidique entre la voie d'écoulement (302) et la voie de dérivation (300), et un second mécanisme de commutation (204) actionnable indépendamment pour activer ou désactiver une communication fluidique entre différentes unités de séparation (232, 238, 240), en particulier entre la deuxième unité de séparation (238) et la troisième unité de séparation (240), dans lequel le premier mécanisme de commutation (202) est un mécanisme rotatif externe agencé autour d'une circonférence du second mécanisme de commutation (204) qui est un mécanisme rotatif interne ;
la vanne (202, 204) comprend un premier organe de vanne et un deuxième organe de vanne, dans lequel au moins l'un des premier et deuxième organes de vanne est adapté pour être déplacé par rapport à l'autre, l'un des premier et deuxième organes de vanne comprend une pluralité d'orifices (210 à 219), et l'autre comprend au moins une gorge (205 à 209) pour coupler fluidiquement des orifices respectifs parmi les orifices (210 à 219) en fonction d'une position de mouvement relative des premier et deuxième organes de vanne l'un par rapport à l'autre ;
la vanne (202, 204) comprend un premier organe de vanne et un deuxième organe de vanne, dans lequel au moins l'un des premier et deuxième organes de vanne est adapté pour être déplacé par rapport à l'autre, l'un des premier et deuxième organes de vanne comprend une pluralité d'orifices (210 à 219), et l'autre comprend au moins une gorge (205 à 209) pour coupler fluidiquement des orifices respectifs parmi les orifices (210 à 219) en fonction d'une position de mouvement relative des premier et deuxième organes de vanne l'un par rapport à l'autre, dans lequel la vanne (202, 204) comprend en outre un troisième organe de vanne et un quatrième organe de vanne, dans lequel au moins l'un des troisième et quatrième organes de vanne est adapté pour être déplacé par rapport à l'autre, l'un des troisième et quatrième organes de vanne comprend une pluralité d'orifices (223 à 228), et l'autre comprend au moins une gorge (220 à 222) pour coupler fluidiquement des orifices respectifs parmi les orifices (223 à 228) en fonction d'une position de mouvement relative des troisième et quatrième organes de vanne l'un par rapport à l'autre.

6. Dispositif (30) selon la revendication 1 ou l'une quelconque des revendications précédentes, comprenant au moins l'une des particularités suivantes :
le réacteur chimique (230) est un réacteur biochimique (230) ;
le réacteur chimique (230) est un réacteur enzymatique ;
le réacteur chimique (230) est un réacteur catalytique ;
le réacteur chimique (230) comprend un support solide (244) et des particules chimiquement actives (246) immobilisées sur le support solide (244) ;
le réacteur chimique (230) comprend une unité de déglycosylation comprenant un support solide (244) et une enzyme (246) immobilisée sur le support solide (244), dans lequel l'enzyme (246) est capable de cliver des glucides de glycoprotéines ;
le réacteur chimique (230) comprend une unité de clivage d'acides aminés comprenant un support solide (244) et une enzyme (246) immobilisée sur le support solide (244), dans lequel l'enzyme (246) comprend la trypsine ;
la voie de dérivation (300) est une voie fluidique annulaire lorsqu'elle est débranchée de la voie d'écoulement (302) ;
la voie d'écoulement (302) comprend une admission (200) pour fournir l'échantillon fluidique et comprend au moins un refoulement (234) pour drainer l'échantillon fluidique ou une fraction ou section de celui-ci après avoir passé au moins une partie de la voie d'écoulement (302) en ayant passé ou non au moins une partie de la voie de dérivation (300) ;
le dispositif (1100) comprend un substrat (1102), dans lequel au moins une partie, en particulier la totalité, des composants du dispositif (1100) sont intégrés dans le substrat (1102) ;
le dispositif (30) comprend des canaux de fluide tubulaires pour fournir un branchement fluidique entre au moins une partie, en particulier la totalité, des composants du dispositif (30) qui sont fournis en tant que structures physiques séparées ou séparables ;
la voie de dérivation (300) et la voie d'écoulement (302) peuvent être branchées de façon commutable de sorte que l'écoulement de l'échantillon fluidique soit activé le long d'une voie fluidique comprenant au moins une partie de la voie d'écoulement (302) et au moins une partie de la voie de dérivation (300) ;
le dispositif (30) est adapté pour conduire un liquide à une pression élevée à laquelle la compressibilité du liquide devient visible ;
le dispositif (30) est adapté pour conduire un liquide à une pression élevée dans une plage de 20 à 200 MPa, et en particulier de 50 à 120 MPa ;
le dispositif (30) comprend un entraînement de phase mobile (20), en particulier un système de pompage, adapté pour conduire l'échantillon fluidique à travers au moins l'une de la voie d'écoulement (302) et de la voie de dérivation (300) ;
le dispositif (30) comprend un détecteur (50) adapté pour détecter des composés séparés de l'échantillon fluidique ;
le dispositif (30) comprend une unité de recueil (60) adaptée pour recueillir des composés séparés de l'échantillon fluidique.

7. Procédé de gestion d'un échantillon fluidique, le procédé comprenant :
la conduite de l'échantillon fluidique d'une voie d'écoulement (302) à une voie de dérivation (300) en communication fluidique avec la voie d'écoulement (302) ;
le débranchement de la voie de dérivation (300) de la voie d'écoulement (302) pour désactiver une communication fluidique entre la voie d'écoulement (302) et la voie de dérivation (300), isolant ainsi la voie de dérivation (300) et l'échantillon fluidique dans la voie de dérivation (300) ;
dans l'état isolé, la réalisation d'une réaction en phase solide entre un réacteur chimique (230) agencé dans la voie de dérivation (300) et l'échantillon fluidique ;
le maintien de la voie de dérivation (300) dans l'état isolé pendant un intervalle de temps prédéfini ou jusqu'à détermination que l'échantillon fluidique a réalisé la réaction en phase solide au moins dans une quantité prédéfinie ;
le piégeage d'une fraction produite par une interaction entre l'échantillon fluidique et le réacteur chimique (230) dans une première unité de séparation (232) agencée dans la voie d'écoulement (302) en aval de la voie de dérivation (300).

8. Procédé selon la revendication 7, dans lequel la réalisation de la réaction en phase solide transforme, en particulier clive, l'échantillon fluidique en une première fraction et une seconde fraction.

9. Procédé selon la revendication 8, dans lequel le procédé comprend, lorsque l'intervalle de temps prédéfini a expiré ou que l'échantillon fluidique a réalisé la réaction en phase solide au moins jusqu'à la quantité prédéfinie, la réactivation d'une communication fluidique entre la voie d'écoulement (302) et la voie de dérivation (300), conduisant ainsi la première fraction et la seconde fraction sur une première unité de séparation (232) pour piéger la première fraction tout en permettant à la seconde fraction de passer la première unité de séparation (232).

10. Procédé selon la revendication précédente, comprenant au moins l'une des particularités suivantes :
le procédé comprend, tandis que la voie de dérivation (300) est isolée, la conduite de l'échantillon fluidique ou d'un solvant à travers la voie d'écoulement (302) à la première unité de séparation (232) ;
la réactivation de la communication fluidique est réalisée pour conduire la seconde fraction sur une deuxième unité de séparation (238) pour piéger sélectivement la seconde fraction.

11. Procédé selon la revendication précédente, dans lequel la réactivation de la communication fluidique est réalisée pour conduire ainsi d'autres fractions de l'échantillon fluidique à un drain (234).

12. Procédé selon la revendication 10 ou l'une quelconque des revendications précédentes, comprenant la commutation de la deuxième unité de séparation (238) en communication fluidique avec une troisième unité de séparation (240) et la désactivation d'une communication fluidique entre la première unité de séparation (232) et la deuxième unité de séparation (238).

13. Procédé selon la revendication précédente, comprenant la libération de la seconde fraction de la deuxième unité de séparation (238) et la conduite de la seconde fraction à la troisième unité de séparation (240).

14. Procédé selon la revendication 7 ou l'une quelconque des revendications précédentes, comprenant au moins l'une des particularités suivantes :
la conduite de l'échantillon fluidique comprend le chargement d'une partie de l'échantillon fluidique sur le réacteur chimique (230) et la conduite d'une autre partie de l'échantillon fluidique à un drain (234) ;
le débranchement comprend le débranchement temporaire de la voie de dérivation (300) de tout entraînement de phase mobile (20), en particulier de tout système de pompage branché ou pouvant être branché à la voie d'écoulement (302) ;
l'échantillon fluidique comprend des glycoprotéines ;
le réacteur chimique (230) comprend une unité de déglycosylation comprenant un support solide (244) et une enzyme (246) immobilisée sur le support solide (244), dans lequel l'enzyme est capable de cliver des glucides de glycoprotéines ;
la première fraction comprend des glycoprotéines qui sont au moins partiellement exemptes de glucides ;
la seconde fraction comprend des glucides.
